# EUROPEAN PATENT APPLICATION

(11) **EP 4 651 055 A1**
(43) Date of publication of application: **19.11.2025**
(21) Application number: 25156975.2
(22) Date of filing: 10.02.2025
(51) Int. Cl.: G06Q 20/20, G07G 1/00, G07G 3/00

(54) **INFORMATION PROCESSING APPARATUS, GUIDANCE SYSTEM, AND CONTROL METHOD FOR AN INFORMATION PROCESSING APPARATUS**

(30) Priority: 16.05.2024 JP 2024080305
(71) Applicant: Toshiba TEC Kabushiki Kaisha, Tokyo 141-8562 (JP)
(72) Inventor: Hiramatsu, Naotake, Tokyo, 141-8562 (JP)
(74) Representative: Bandpay & Greuter

(57) **Abstract**

According to an embodiment, an information processing apparatus acquires image information capable of identifying a state of each of a plurality of transaction processing apparatuses that a customer performs an operation relating to a transaction. The information processing apparatus receives, for each of the plurality of transaction processing apparatuses, detection information indicating presence of a person at a specified operation position on the corresponding transaction processing apparatus. Further, the information processing apparatus determines, on the basis of the acquired image information and the received detection information, whether or not each of the plurality of transaction processing apparatuses is in a state where the operation by the customer can be started.

## Description

### FIELD

An embodiment to be described here generally relates to an information processing apparatus, a guidance system, and a control method for an information processing apparatus.

### BACKGROUND

In recent years, mass retailers such as supermarkets have been introducing transaction processing apparatuses of a self-service method in which customers who are purchasers perform payment processing by themselves and there has been an increase in the number of such mass retailers that have installed a large number of self-service transaction processing apparatuses. In the case where a large number of self-service transaction processing apparatuses are introduced in this way, the work of guiding and directing customers who are to perform payment processing to an available self-service transaction processing apparatus is a burden.

In this regard, various technologies that automatically perform such guidance and direction have been proposed. For example, there is a technology that determines an available transaction processing apparatus by detecting the presence or absence of a customer near each transaction processing apparatus using a human sensor, a camera, or the like, and performs display for guiding a customer to the apparatus determined to be available on a guidance device.

However, such a method of determining an available apparatus on the basis of the result of detecting the presence or absence of a customer using a human sensor, a camera, or the like has had a problem of low accuracy.

### DISCLOSURE OF INVENTION

To this end, there is provided an information processing apparatus according to claim 1. There is also provided a control method for an information processing apparatus according to claim 9. There is further provided a guidance system according to claim 13. Preferred embodiments are set out in the dependent claims.

### BRIEF DESCRIPTION OF THE DRAWINGS

Fig. 1 is a schematic configuration diagram showing a guidance system according to a first embodiment.
Fig. 2 is a perspective view showing an example of an external configuration of a self-service POS terminal as an example of a self-service transaction processing apparatus included in the guidance system.
Fig. 3 is a block diagram showing an example of a main circuit configuration of the self-service POS terminal.
Fig. 4 is a schematic diagram showing an example of a camera image acquired by a transaction camera included in the guidance system.
Fig. 5 is a schematic diagram showing an example of the camera image, similarly.
Fig. 6 is a schematic diagram showing an example of a checkout counter to which the guidance system is applied.
Fig. 7 is a diagram describing status information of the transaction processing apparatus expressed by a color pattern and a light emission pattern of a patrol lamp included in the transaction processing apparatus.
Fig. 8 is a block diagram showing a main circuit configuration of a store server as an information processing apparatus according to a first embodiment included in the guidance system.
Fig. 9 is a schematic diagram showing a main data structure stored in a terminal status table included in the store server.
Fig. 10 is a diagram showing a first part of a series of sequence diagrams that shows an overview of the operation relating to the guidance of an available cash register in the guidance system.
Fig. 11 is a diagram showing a second part of the series of sequence diagrams that shows an overview of the operation relating to the guidance of an available cash register in the guidance system.
Fig. 12 is a flowchart showing a main procedure of information processing executed by a processor of the store server.
Fig. 13 is a diagram showing an example of display on a display device included in the guidance system.
Fig. 14 is a diagram showing another example of the display on the display device.
Fig. 15 is a diagram showing still another example of the display on the display device.
Fig. 16 is a diagram showing an example of an idle screen displayed on a touch panel of a self-service POS terminal as an example of a self-service transaction processing apparatus according to a second embodiment.
Fig. 17 is a diagram showing an example of a transaction start screen displayed on the touch panel of the self-service POS terminal similarly.
Fig. 18 is a diagram showing an example of a registration screen displayed on the touch panel of the self-service POS terminal similarly.
Fig. 19 is a diagram showing an example of a payment selection screen displayed on the touch panel of the self-service POS terminal similarly.
Fig. 20 is a diagram showing an example of a transaction completion screen displayed on the touch panel of the self-service POS terminal similarly.
Fig. 21 is a schematic diagram showing an example of a checkout counter to which a guidance system according to a third embodiment is applied.
Fig. 22 is a diagram showing an example of a screen displayed on a touch panel of an attendant terminal in the third embodiment.
Fig. 23 is a diagram showing an example of the screen displayed on the touch panel of the attendant terminal similarly.
Fig. 24 is a sequence diagram showing an overview of the operation relating to the guidance of an available cash register in a guidance system according to a fourth embodiment.
Fig. 25 is a flowchart showing a main procedure of information processing executed by a processor of a store server as an information processing apparatus according to the fourth embodiment.

### DETAILED DESCRIPTION

According to an embodiment, an information processing apparatus includes: a communication interface; and a processor. The communication interface communicates with an external device. The external device includes a camera and a detection device. The camera images a plurality of transaction processing apparatuses that a customer performs an operation relating to a transaction and generates image information capable of identifying a state of each of the plurality of transaction processing apparatuses. Further, the detection device detects, for each of the plurality of transaction processing apparatuses, a person at a specified operation position on the transaction processing apparatus and outputs detection information indicating presence of the person at the specified operation position on the transaction processing apparatus. The processor is configured to acquire the image information generated by the camera from the camera via the communication interface. The processor is further configured to receive the detection information output by the detection device from the detection device via the communication interface. The processor is further configured to determine, on a basis of the acquired image information and the received detection information, whether or not each of the plurality of transaction processing apparatuses is in a state where the operation by the customer can be started. The processor is further configured to output, in accordance with a result of the determination, guidance information for guiding a waiting customer waiting to start the operation to a transaction processing apparatus that is in the state where the operation by the customer can be started, of the plurality of transaction processing apparatuses.

Guidance systems according to embodiments of the present disclosure will be described below with reference to the drawings. In the drawings, the same reference symbols denote the same or similar portions.

### [First embodiment]

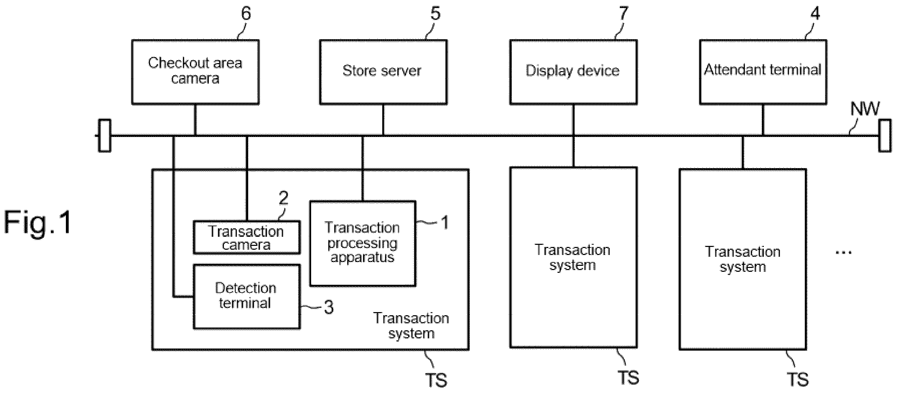

Fig. 1 is a schematic configuration diagram showing a guidance system according to a first embodiment. The guidance system includes a plurality of self-service transaction processing apparatuses 1, a plurality of transaction cameras 2, a plurality of detection terminals 3, an attendant terminal 4, a store server 5, a checkout area camera 6, and a display device 7. The guidance system is configured by connecting the transaction processing apparatuses 1, the transaction cameras 2, the detection terminals 3, the attendant terminal 4, the store server 5, the checkout area camera 6, and the display device 7 via a communication network NW such as a local area network (LAN). One transaction camera 2 and one detection terminal 3 are associated with each transaction processing apparatus 1, and the transaction processing apparatus 1, the transaction camera 2, and the detection terminal 3 constitute a transaction system TS. Each transaction system TS is installed in a checkout counter of a store. Note that although one transaction camera 2 and one detection terminal 3 are associated with each transaction processing apparatus 1 in this case, one transaction camera 2 or one detection terminal 3 may be associated with two or more transaction processing apparatuses 1 or one transaction camera 2 and one detection terminal 3 may be associated with all transaction processing apparatuses 1.

The self-service transaction processing apparatus 1 is a terminal that a customer performs an operation relating to a transaction. This self-service transaction processing apparatus 1 includes a self-payment terminal that has a payment function and allows a customer who is a purchaser to make a payment on the basis of transaction data of a registered product by himself/herself, a self-product-registration terminal that has a function of registering a product and allows a customer to register a product by himself/herself, and a self-service point-of-sales (POS) terminal that has a function of registering a product and a payment function and allows a customer to register a product and make a payment on the basis of transaction data of the registered product.

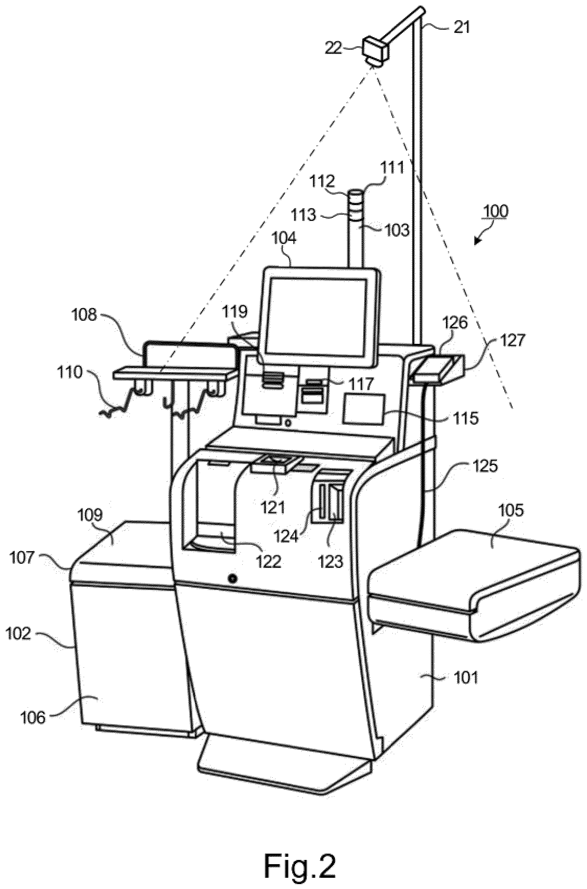

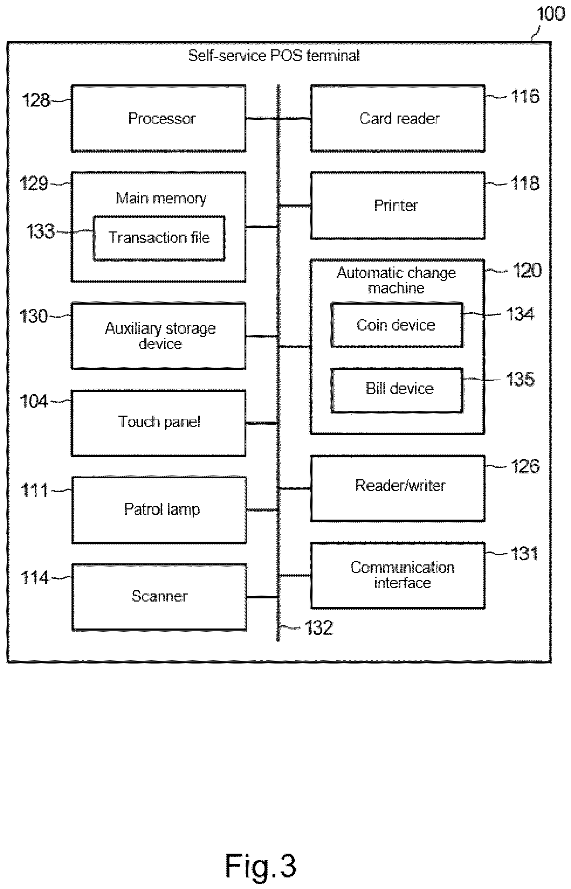

Fig. 2 is a perspective view showing an example of an external configuration of a self-service POS terminal 100, and Fig. 3 is a block diagram showing an example of a main circuit configuration of the self-service POS terminal 100.

As shown in Fig. 2, the self-service POS terminal 100 includes a body 101 placed on the floor surface, and a weighing unit 102 placed next to this body 101. A display pall 103 and a touch panel 104 are attached to the upper part of the body 101. A basket stand 105 is provided in the central part of the side surface of the body 101 opposite to the side where the weighing unit 102 is placed. The basket stand 105 is for a customer who is a purchaser and has come from the sales floor to place a shopping basket containing a product to be purchased, or the like. The customer stands in front of the body 101 in Fig. 2 so that he/she can see the screen of the touch panel 104 to perform an operation. For this reason, from the customer's point of view, the basket stand 105 is on the right side of the body 101 and the weighing unit 102 is on the left side with the body 101 sandwiched therebetween. In the following description, the side where the customer stands is the front of the body 101, the side where the weighing unit 102 is placed is the left side of the body 101, and the side where the basket stand 105 is provided is the right side of the body 101.

The weighing unit 102 has a structure in which a weighing plate 107 is provided on the upper part of a housing 106 and a bag holder 108 is mounted above this weighing plate 107. The upper surface of the weighing plate 107 is a placement surface 109. The bag holder 108 includes a pair of holding arms 110 and holds a plastic bag or a shopping bag brought by a customer, a so-called my own bag, with the holding arms 110. The weighing unit 102 measures the weight of the product placed on the placement surface 109, which is in the shopping bag or my own bag held by the holding arms 110. The placement surface 109 is an example of a product placement region where a product to be purchased and paid is placed. The weighing unit 102 is an example of a weighing device that measures the weight of the product placed in the product placement region.

The display pall 103 includes, at the tip portion, a patrol lamp 111 that displays status information indicating the state of the self-service POS terminal 100. The patrol lamp 111 includes, for example, a first light-emitting unit 112 that selectively emits blue and red light and a second light-emitting unit 113 that emits yellow light. The light has two types of light emission patterns of emitting light in a continuous manner (lit) and repeating emitting light for a certain period and turning off (blinking). The display pall 103 is capable of displaying status information by combining the color pattern and the light emission pattern of the first light-emitting unit 112 and the light emission pattern of the second light-emitting unit 113.

The touch panel 104 includes a display for displaying various screens relating to a transaction such as registration and a payment to a user who operates the self-service POS terminal 100 and a touch sensor for detecting a touch input to the screen by the user. The user of the self-service POS terminal 100 is usually a customer.

A reading window 115 of a scanner 114 (see Fig. 3), a card insertion port 117 of a card reader 116 (see Fig. 3), and an issuing port 119 of a receipt printed by a printer 118 (see Fig. 3) are formed on the front of the body 101. Further, a coin insertion slot 121, a coin outlet 122, a bill insertion slot 123, and a bill outlet 124 of an automatic change machine 120 (see Fig. 3) are also formed on the front of the body 101.

Further, a communication cable 125 extends from the right side surface of the body 101 to the outside, and a reader/writer 126 for electronic money media is connected to the tip of this communication cable 125. The reader/writer 126 is placed on a stand 127 provided on the upper part of the right side surface of the body 101.

As shown in Fig. 3, the self-service POS terminal 100 includes a processor 128, a main memory 129, an auxiliary storage device 130, a communication interface 131, and a system transmission path 132, in addition to the above-mentioned touch panel 104, patrol lamp 111, scanner 114, card reader 116, printer 118, automatic change machine 120, and reader/writer 126. The system transmission path 132 includes an address bus, a data bus, a control signal line, and the like. The system transmission path 132 connects the processor 128 to the other respective units directly or via a signal input/output circuit and transmits data signals to be exchanged therebetween. The processor 128, the main memory 129, and the auxiliary storage device 130 are connected via the system transmission path 132 to constitute a computer of the self-service POS terminal 100.

The processor 128 corresponds to the central part of the above computer. The processor 128 controls the respective units in order to realize various functions as the self-service POS terminal 100 in accordance with an operating system or a control program. The processor 128 is, for example, a central processing unit (CPU). The processor 128 may be, for example, a micro processing unit (MPU), a system on a chip (SoC), a digital signal processor (DSP), a graphics processing unit (GPU), an application specific integrated circuit (ASIC), a programmable logic device (PLD), a field-programmable gate array (FPGA), or the like. Alternatively, the processor 128 may be a combination of two or more of them.

The main memory 129 corresponds to the main storage part of the above computer. The main memory 129 has a non-volatile memory area and a volatile memory area. The main memory 129 stores an operating system or a control program in the non-volatile memory area. The main memory 129 stores data necessary for the processor 128 to execute processing for controlling the respective units in the non-volatile or volatile memory area in some cases. The main memory 129 uses the volatile memory area as a work area where data is appropriately written by the processor 128. The non-volatile memory area is, for example, a read only memory (ROM). The volatile memory area is, for example, a random access memory (RAM). For example, the main memory 129 stores a transaction file 133.

The transaction file 133 is a data file for storing data relating to one commercial transaction processed by the self-service POS terminal 100. The transaction file 133 stores data such as a transaction number, purchased-product data, the total number, the total amount, the discount amount, and the payment amount. The transaction number is a series of numbers that is issued each time a commercial transaction is processed by the self-service POS terminal 100. The purchased-product data is record data created for each product bought and sold in the commercial transaction identified by the transaction number. The purchased-product data includes items such as a product code, a product name, a price, a number, and the amount of money. The number is the number of products to be purchased identified by the product code. The amount of money is the amount of money for the number of products to be purchased. The transaction file 133 is capable of storing a plurality of pieces of purchased-product data. The total number is the sum of the numbers of each piece of purchased-product data. The total amount is the sum of the amounts of money of each piece of purchased-product data. The discount amount is the discount amount against the total amount. The payment amount is the amount of money obtained by subtracting the discount amount from the total amount.

The auxiliary storage device 130 corresponds to the auxiliary storage part of the above computer. For example, an electric erasable programmable read-only memory (EEPROM) (registered trademark), a hard disc drive (HDD), or a solid state drive (SSD) can be used as the auxiliary storage device 130. The auxiliary storage device 130 stores data to be used by the processor 128 to perform various types of processing, data created by the processing by the processor 128, and the like. Note that the auxiliary storage device 130 stores the above control program in some cases.

The communication interface 131 perform data communication with an external device connected via the communication network NW in accordance with a preset communication protocol. The external device is, for example, the attendant terminal 4 or the store server 5.

The scanner 114 reads a code symbol from a product held over the reading window 115. A code symbol obtained by encoding a product ID or the like for identifying each product sold in a store is attached to the product. The code symbol is, for example, a barcode. The code symbol may be, for example, a two-dimensional data code. The scanner 114 may be of a type that reads a code symbol by laser beam scanning or a type that reads a code symbol from an image taken by an imaging device.

The card reader 116 reads card data recorded on a card medium such as a credit card and a rewards card. The card reader 116 draws the card medium inserted into the card insertion port 117 into the body 101, reads the card data, and then ejects the card medium from the card insertion port 117.

The printer 118 prints receipt data or the like indicating the content of the commercial transaction on receipt paper. The receipt paper on which the receipt data has been printed is ejected from the issuing port 119, cut by a cutter (not shown), and issued as a receipt or a receipt certificate.

The automatic change machine 120 includes a coin device 134 and a bill device 135. The coin device 134 sorts coins inserted into the coin insertion slot 121 one by one, identifies the type of coin, and houses the coin in a coin box in accordance with the type of coin. The coin device 134 takes out the coin of the corresponding type of coin from the coin box on the basis of, for example, change data, and dispense the coin into the coin outlet 122. The bill device 135 sorts bills inserted into the bill insertion slot 123 one by one, identifies the type of bill, and houses the bill in a bill box in accordance with the type of bill. The bill device 135 takes out the bill of the corresponding type of bill from the bill box on the basis of, for example, change data, and dispense the bill into the bill outlet 124.

The reader/writer 126 reads and writes the electronic money recorded on an electronic money medium. The electronic money medium is, for example, a contactless IC card. The electronic money medium may be an electronic apparatus such as a smartphone and a tablet terminal.

The processor 128 implements a known processing unit relating to product registration and payment. The respective units implemented in the processor 128 can also be referred to as respective functions. The respective units implemented in the processor 128 can also be referred to as being implemented in a control unit including the processor 128 and the main memory 129.

As described above, the self-service POS terminal 100 has a payment function that allows either a payment by cash or a cashless payment to be made. The cashless payment includes a credit card payment, an electronic money payment, a point payment, a code payment, and the like. Each of the plurality of self-service POS terminals 100 is installed in a checkout counter that is a checkout area of a store, and a customer who is a purchaser who has finished shopping is an operator. A customer who has placed a product to be purchased in a shopping basket or the like or added the product to a shopping cart in a sales floor where products are displayed and moved to the checkout counter operates the self-service POS terminal 100 to perform processing of registering the product to be purchased and payment processing on the transaction data of the product to be purchased on which the product registration has been performed, i.e., make a payment. In this way, the customer makes a payment relating to a transaction from the registration of a product to a payment by himself/herself.

In the following, the transaction processing apparatus 1 will be described as such a self-service POS terminal 100. The transaction system TS can be referred to as a cash register system RS. It goes without saying that the present invention may be a self-payment terminal or a self-registration terminal that is the transaction processing apparatus 1 other than the self-service POS terminal 100.

As shown in Fig. 2, the transaction camera 2 includes a camera pall 21 that is attached to the upper part of the body 101 of the self-service POS terminal 100 and a camera 22 mounted at the tip of this camera pall 21. As shown by a broken line in Fig. 2, the mounting position and posture of the camera 22 are set such that at least a customer standing within a predetermined operation range including the front of the body 101 for operating the self-service POS terminal 100 falls within the angle of view, i.e., the imaging area. The camera 22 images the action of the customer operating the self-service POS terminal 100 and transmits the taken image to the corresponding detection terminal 3 via the communication network NW on the basis of the correspondence with the detection terminal 3 set in advance. Note that although the camera image has been described to be transmitted via the communication network NW, the camera image may be transmitted from the camera 22 to the detection terminal 3, for example, directly through a universal serial bus (USB) cable. In this case, it is unnecessary to set the correspondence with the detection terminal 3 in the camera 22 in advance.

The detection terminal 3 is an edge computer such as a personal computer. The detection terminal 3 includes an AI human detection engine and constitutes an AI camera in cooperation with the camera 22 of the transaction camera 2. The detection terminal 3 detects the presence or absence of a customer who operates the self-service POS terminal 100 from the camera image acquired by the camera 22 of the transaction camera 2, at predetermined time intervals. The detection terminal 3 detects the presence or absence of a customer using a recognition technology such as a known face detection method and a motion detection method.

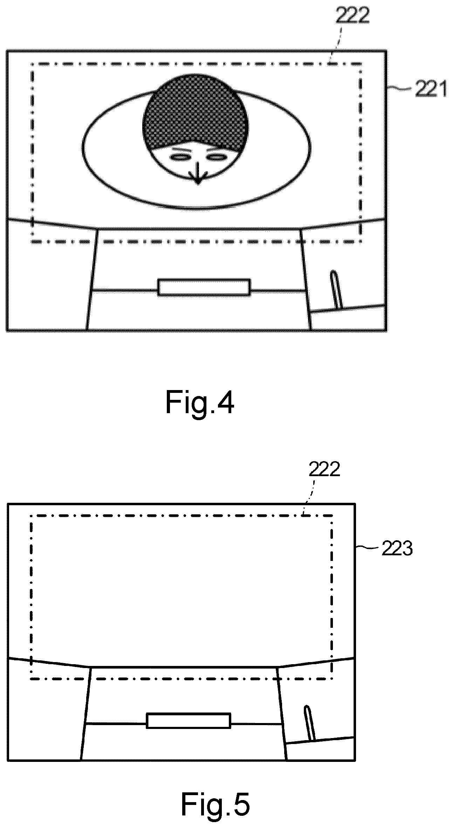

Fig. 4 is a schematic diagram showing an example of a camera image 221 acquired by the camera 22 of the transaction camera 2. In the case where the camera image acquired by the camera 22 is the camera image 221 showing a person, as shown in Fig. 4, the detection terminal 3 detects that there is a person within a predetermined operation range 222 including the front of the body 101 for operating the self-service POS terminal 100. In the case of detecting that there is a person within the operation range 222, the detection terminal 3 transmits a human detection notification to the store server 5.

Fig. 5 is a schematic diagram showing an example of a camera image 223, similarly. A person cannot be detected from the camera image 223 showing no person within the operation range 222 as shown in Fig. 5. Therefore, in this case, the detection terminal 3 does not transmit a human detection notification to the store server 5.

The attendant terminal 4 is a terminal to be operated by a sales clerk as an attendant who monitors the self-service POS terminals 100 that are the plurality of transaction processing apparatuses 1 connected via the communication network NW. The attendant terminal 4 may be a tablet terminal that can be wirelessly connected to the communication network NW and can be carried by the sales clerk.

The attendant terminal 4 is a terminal to be operated by a sales clerk as an attendant who monitors the self-service POS terminals 100 that are the plurality of transaction processing apparatuses 1 connected via the communication network NW. The attendant terminal 4 may have a configuration similar to that of the self-service POS terminal 100 shown in Fig. 2 and Fig. 3 except that the camera pall 21 and the camera 22 are not mounted. Note that the attendant terminal 4 stores the status of each self-service POS terminal 100 in the main memory 129. For example, the attendant terminal 4 is capable of storing, in the main memory 129, a list of products to be purchased registered in each self-service POS terminal 100 and an error occurrence status. The attendant terminal 4 displays the status of each self-service POS terminal 100 stored in the main memory 129 on the display of the touch panel 104. Further, the attendant terminal 4 may have a function for handling a payment that requires manual intervention, such as a payment by a cash voucher and a gift certificate that cannot be red by machine, a return, and a refund, in addition to the function of a payment by cash and a cashless payment. Note that the attendant terminal 4 may be a personal computer that does not have the function of transaction processing or a tablet terminal that can be wirelessly connected to the communication network NW and can be carried by a sales clerk.

The store server 5 provides various services relating to the transaction system to each of the self-service POS terminals 100 connected via the communication network NW. Further, the store server 5 displays display-information to the display device 7 connected via the communication network NW, the display-information indicting the content to be displayed on the display device 7. The detailed configuration of the store server 5 will be described below.

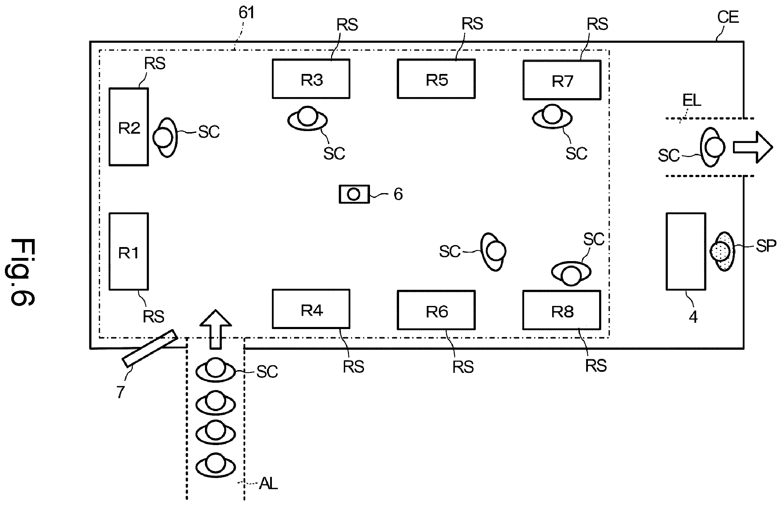

Fig. 6 is a schematic diagram showing an example of a checkout counter CE to which the guidance system is applied. In the example of Fig. 6, eight cash register systems RS each including the self-service POS terminal 100 and one attendant terminal 4 are installed in the checkout counter CE. Although the present disclosure is not limited thereto, the configuration and operation will be described below on the basis of the number of cash register systems RS and the installation layout of this checkout counter CE.

The checkout counter CE includes an entrance and an exit for purchasers. The entrance is equipped with an entrance lane AL where purchasers SC line up to wait for the cash register. The entrance is equipped with an exit lane EL through which the purchaser SC who has made a payment passes. Further, one display device 7 corresponding to the entrance lane AL is installed in the checkout counter CE.

Note that cash register numbers R1 to R8 are assigned to uniquely identify the respective cash register systems RS. The cash register numbers R1 to R8 can be assigned arbitrarily by the administrator of the store server 5. A sales clerk SP is placed at the attendant terminal 4.

The checkout area camera 6 is installed in the ceiling or the like of this checkout counter CE, images the checkout counter CE, and transmits the taken camera video to the store server 5. The checkout area camera 6 is, for example, an all-round camera or a fisheye camera capable of taking 360-degree images and installed such that all self-service POS terminals 100 of the plurality of cash register systems RS installed in the checkout counter CE, specifically, the patrol lamps 111 of all self-service POS terminals 100, fall within an imaging range 61 as shown in Fig. 6. Note that in the case where all patrol lamps 111 cannot be imaged by one checkout area camera 6, the checkout area camera 6 may include a plurality of checkout area cameras. The checkout area camera 6 is an example of a generation device that generates image information capable of identifying the state of each of the plurality of transaction processing apparatuses 1.

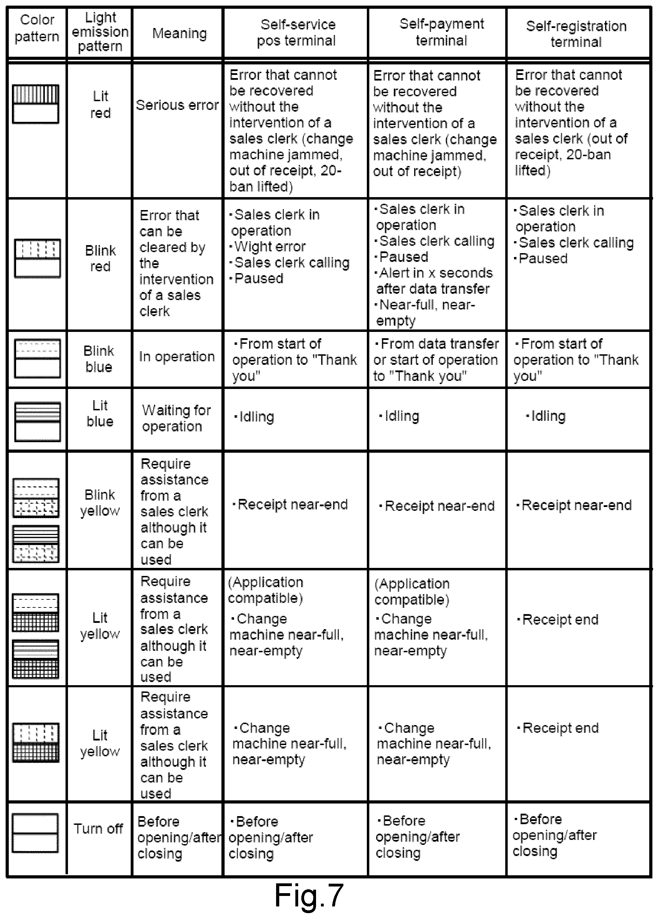

Fig. 7 is a diagram describing status information of a transaction processing apparatus, i.e., the self-service POS terminal 100, the self-payment terminal, and the self-registration terminal, which is expressed by the color pattern and the light emission pattern of the patrol lamp 111. Note that in Fig. 7, being lit is indicated by solid hatching and blinking is indicated by broken hatching. The patrol lamp 111 displays that it is in use by causing the first light-emitting unit 112 to blink blue and that it is idle (i.e., available) by causing the first light-emitting unit 112 to be lit blue. Therefore, the store server 5 is capable of determining the availability of each self-service POS terminal by recognizing the color pattern and the light emission pattern of the patrol lamp 111 of each self-service POS terminal 100 from the camera video taken by the checkout area camera 6. In this way, the patrol lamp 111 is capable of expressing whether the transaction processing apparatus 1 is in the state of waiting to start use or being used by at least one of the light emission color or the light emission state. The patrol lamp 111 is an example of a display member that displays whether the transaction processing apparatus 1 is in the state of waiting to start use or being used. Note that although the patrol lamp 111 including two light-emitting units, i.e., the first light-emitting unit 112 and the second light-emitting unit 113, is exemplified in this embodiment, whether or not the transaction processing apparatus 1 is in the state of waiting to start use or being used may be indicated by one light-emitting unit.

The display device 7 is a display device such as a liquid crystal display. The display device 7 displays the display-information transmitted from the store server 5. The display-information can be screen information for displaying to guide a waiting customer who is a purchaser waiting to make a payment to an available device that can be currently used, of the plurality of self-service POS terminals 100, i.e., an available device. Therefore, the display device 7 is an example of a presentation device that presents the guidance information generated by the store server 5 that is an example of an information processing apparatus to a waiting customer waiting to start an operation. The presentation device can be said to display the guidance information for guiding a user to the available transaction processing apparatus 1.

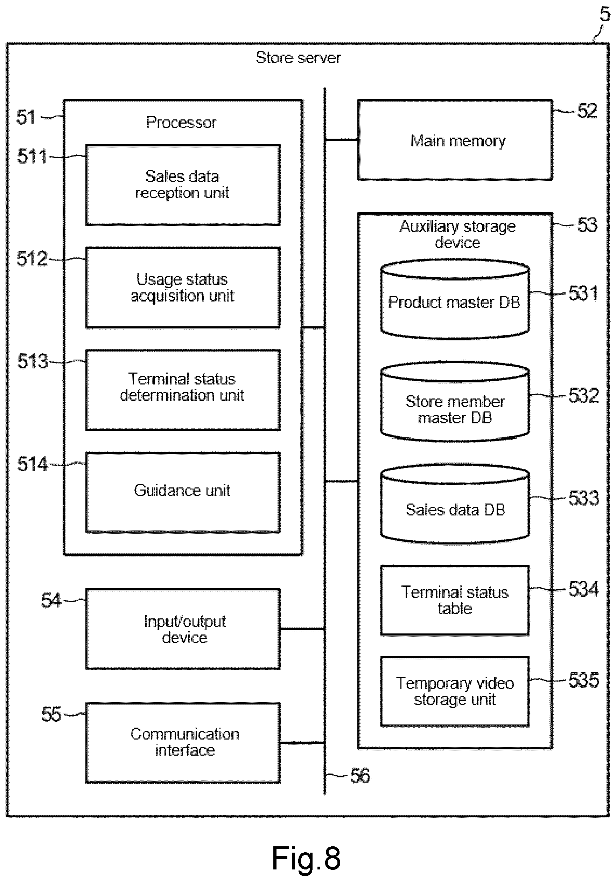

Fig. 8 is a block diagram showing a main circuit configuration of the store server 5. The store server 5 includes a processor 51, a main memory 52, an auxiliary storage device 53, an input/output device 54, a communication interface 55, and a system transmission path 56. The system transmission path 56 includes an address bus, a data bus, a control signal line, and the like. The system transmission path 56 connects the processor 51 to the other respective units directly or via a signal input/output circuit and transmits data signals to be exchanged therebetween. The processor 51, the main memory 52, and the auxiliary storage device 53 are connected via the system transmission path 56 to constitute a computer of the store server 5.

The processor 51 corresponds to the central part of the above computer. The processor 51 controls the respective units in order to realize various functions as the store server 5 in accordance with an operating system or a control program. The processor 51 is, for example, a CPU. The processor 51 may be, for example, an MPU, an SoC, a DSP, a GPU, an ASIC, a PLD, or an FPGA. Alternatively, the processor 51 may be a combination of two or more of them.

The main memory 52 corresponds to the main storage part of the above computer. The main memory 52 has a non-volatile memory area and a volatile memory area. The main memory 52 stores an operating system or a control program in the non-volatile memory area. The main memory 52 stores data necessary for the processor 51 to execute processing for controlling the respective units in the non-volatile or volatile memory area in some cases. The main memory 52 uses the volatile memory area as a work area where data is appropriately written by the processor 51. The non-volatile memory area is, for example, a ROM. The volatile memory area is, for example, a RAM.

The auxiliary storage device 53 corresponds to the auxiliary storage part of the above computer. For example, an EEPROM, an HDD, or an SSD can be used as the auxiliary storage device 53. The auxiliary storage device 53 stores data to be used by the processor 51 to perform various types of processing, data created by the processing by the processor 51, and the like. The auxiliary storage device 53 stores the above control program in some cases.

The input/output device 54 is a user interface that includes an input device such as a keyboard and a mouse and a display device such as a liquid crystal display. Note that the store server 5 does not necessarily need to include the input/output device 54. As the user interface in this case, a management terminal (not shown) that is capable of communicating through the communication interface 55 via the communication network NW can be used. The management terminal can include, for example, a personal computer, a smartphone, or a tablet computer.

The communication interface 55 performs data communication with an external device connected via the communication network NW in accordance with a preset communication protocol. The external device is, for example, the self-service POS terminal 100, the attendant terminal 4, the checkout area camera 6, or the display device 7.

The store server 5 includes a product master database 531, a store member master database 532, a sales data database 533, a terminal status table 534, and a temporary video storage unit 535 in the auxiliary storage device 53. Note that in Fig. 8, the database is abbreviated as DB.

The product master database 531 stores data relating to each product sold in the store. The product master database 531 stores data such as a product ID, a product name, a price, and a category name with one product as one record. The product ID is a unique code set for each product to identify each product individually.

The store member master database 532 stores data relating to a customer who has performed membership registration such as a point member, a so-called member. The store member master database 532 includes, for example, data of a member ID with one member as one record. The store member master database 532 may also include personal information such as the member's gender, age, name, address, and contact information. The member ID is a unique code set for each member to identify each member individually. The member owns a recording medium on which the member ID has been recorded. The recording medium is, for example, a magnetic card, a contact integrated circuit (IC) card, a contactless IC card, a smartphone. A purchaser can enjoy the benefits as a member by inputting the membership code to a payment device at arbitrary timing before making a payment using the payment device. The method of inputting a membership code is not particularly limited. For example, the purchaser SC may cause the scanner 114, the card reader 116, or the reader/writer 126 included in the self-service POS terminal 100 to read the membership code from the medium.

The sales data database 533 stores sales data generated in each transaction, which is transmitted from each self-service POS terminal 100 when the payment is completed, i.e., when the transaction is finished. The sales data database 533 stores transaction data indicating the transaction content of the product to be paid and payment data relating to the payment in the transaction With one transaction as one record. The transaction data includes the product name (product code) and the amount of money of the product to be paid, the total amount of each product, and the like. The transaction data is data stored in the transaction file 133 of the self-service POS terminal 100. The payment data includes the deposit amount paid by the purchaser, the change amount, and the like in the case where the payment has been made in cash, and information regarding the payment method in the case where a cashless payment has been made. Further, the sales data may include elements such as a membership code, a company code (company name) indicating the company operating the store, a store code (store name), a phone number of the store, an address, a transaction date and time, a transaction number (receipt number), a cash register number, and a staff member name. Note that the elements included in the sales data are not limited to these examples, other elements may be included, and elements such as a phone number and an address may be excluded.

In the self-service POS terminal 100, for example, the code symbol printed on or attached to the product is read by the scanner 114 to acquire the product code, the product data of the product identified by the product code is read from a product data file of the self-service POS terminal 100, and the product data is registered in the transaction data to update the sales data including the transaction data and the payment data and store the sales data in the transaction file 133. The product data file can be stored in the auxiliary storage device 130 of the self-service POS terminal 100 and may be a copy of the product master database 531. Further, in the case where a membership code is acquired from a recording medium by the scanner 114, the self-service POS terminal 100 checks whether or not the membership code is registered in a store member data file of the self-service POS terminal 100 and adds, in the case where it is registered, the membership code to the transaction data as a store membership code to update and store the sales data. When the payment processing is completed, i.e., when one transaction is finished, the self-service POS terminal 100 prints the sales data on a sheet of paper to issue a paper receipt for the one transaction and transmits the sales data for the one transaction to the store server 5. The sales data database 533 stores the sales data transmitted from each self-service POS terminal 100 in this way.

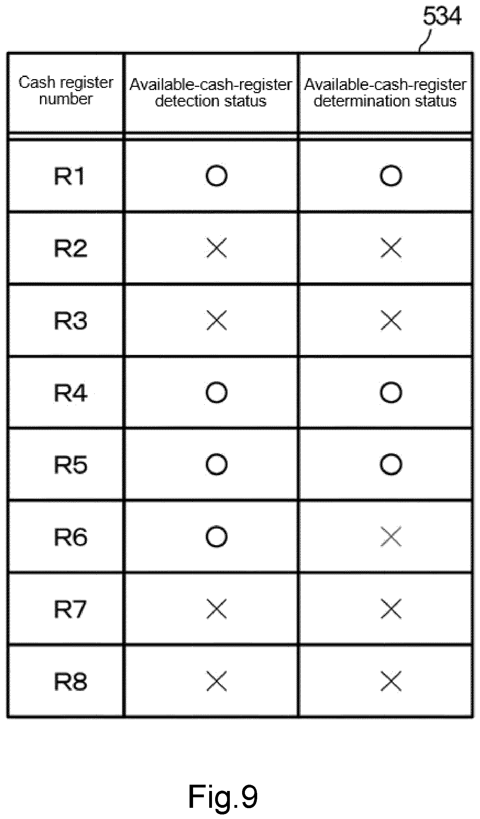

The terminal status table 534 stores the current usage status of each of the self-service POS terminals 100. Fig. 9 is a schematic diagram showing a main data structure stored in this terminal status table 534. Note that the data structure shown in Fig. 9 is an example. The format is not particularly limited as long as information necessary for the processor 51 can be acquired. For example, circles and crosses are shown in Fig. 9, but they may be binary values of 1 and 0.

As shown in Fig. 9, for example, the terminal status table 534 stores an available-cash-register detection status and an available-cash-register determination status for each cash register number assigned to the self-service POS terminal 100.

The available-cash-register detection status is a detection status of the available cash register based on the human detection notification transmitted from the detection terminal 3. In this available-cash-register detection status, the circle indicates that there is no person in front of the self-service POS terminal 100, i.e., it is not in use and is available, and the cross indicates that it is in use. Fig. 9 shows the status of the checkout counter CE shown in Fig. 6. That is, the example of the terminal status table 534 in Fig. 9 shows a detection status that the self-service POS terminals 100 of the cash register numbers R2, R3, R7, and R8 are in use and the self-service POS terminals 100 of the cash register numbers R1, R4, R5, and R6 are available.

The available-cash-register determination status stores the current status of the self-service POS terminal 100, which is determined on the basis of the status information expressed by the color pattern and the light emission pattern of the patrol lamp 111 of the self-service POS terminal 100. In this available-cash-register determination status, the circle indicates that the self-service POS terminal 100 is in the available status and the cross indicates that the self-service POS terminal 100 is in the in-use status. The example of the terminal status table 534 in Fig. 9 shows the case where the self-service POS terminal 100 of the cash register number R6 is in the in-use status on the basis of the status information.

The temporary video storage unit 535 temporarily stores the camera video for a certain period taken by the checkout area camera 6.

Next, the respective units implemented in the processor 51 of the store server 5 will be described. As shown in Fig. 8, the processor 51 implements, for example, a sales data reception unit 511, a usage status acquisition unit 512, a terminal status determination unit 513, and a guidance unit 514. The respective units implemented in the processor 51 can be referred to as respective functions. The respective units implemented in the processor 51 can also be referred to as being implemented in a control unit including the processor 51 and the main memory 52.

The sales data reception unit 511 receives the sales data for one transaction, which is transmitted from the self-service POS terminal 100 when the one transaction is finished by the communication interface 55. The sales data reception unit 511 stores the received sales data in the sales data database 533.

The usage status acquisition unit 512 acquires the usage status of each self-service POS terminal 100. For example, in this embodiment, as described above, the detection terminal 3 is configured to transmit a human detection notification in the case where there is a person withing the operation range of the self-service POS terminal 100. Therefore, the usage status acquisition unit 512 receives this human detection notification by the communication interface 55 and stores, in the case where it is received, that the self-service POS terminal 100 is in use in the available-cash-register detection status of the terminal status table 534. The usage status acquisition unit 512 stores, in the available-cash-register detection status of the terminal status table 534, that the self-service POS terminal 100 for which no human detection notification is received is an available cash register. In this way, the usage status acquisition unit 512 is an example of a reception unit that receives, for each of the plurality of transaction processing apparatuses 1, detection information indicating the presence of a person at a specified operation position on the transaction processing apparatus 1. Further, the plurality of detection terminals 3 is an example of a detection device that detects, for each of the plurality of transaction processing apparatuses, the presence of a person at a specified operation position on the transaction processing apparatus and outputs detection information indicating the presence of the person.

The terminal status determination unit 513 determines the status of each self-service POS terminal 100. Specifically, the terminal status determination unit 513 receives the camera video of each checkout area camera 6 by the communication interface 55 and stores, in the temporary video storage unit 535, the camera video for the time period that allows whether the patrol lamp 111 blinks or is lit to be determined. In this way, the terminal status determination unit 513 is an example of an acquisition unit that acquires image information capable of identifying the state of each of the plurality of transaction processing apparatuses 1 that a customer performs an operation relating to a transaction. The terminal status determination unit 513 then determines the status information of each self-service POS terminal 100 expressed by the color pattern and the light emission pattern of the patrol lamp 111 from the image of the patrol lamp 111 of each self-service POS terminal 100 shown in this camera video. The terminal status determination unit 513 determines, on the basis of the determined status information, whether the self-service POS terminal 100 is in the in-use status or the available status, and stores the determination result in the available-cash-register determination status of the terminal status table 534. In this way, the terminal status determination unit 513 is an example of a determination unit that determines, on the basis of the image information, whether or not each of the plurality of transaction processing apparatuses 1 is in the state where the operation by the customer can be started.

The guidance unit 514 determines, on the basis of the available-cash-register detection status and the available-cash-register determination status of each self-service POS terminal 100 stored in the terminal status table 534, the self-service POS terminal 100 that should be a guide as an available cash register. Specifically, the guidance unit 514 determines that the self-service POS terminal 100 in which both the available-cash-register detection status and the available-cash-register determination status indicate an available cash register is the self-service POS terminal 100 that should be a guide as an available cash register. The guidance unit 514 creates a guidance screen for guiding the purchaser SC to an available cash register in accordance with the determined self-service POS terminal 100 that should be a guide as an available cash register, and transmits the created guidance screen to the display device 7 by the communication interface 55. A specific example of this guidance screen will be described below. In this way, the guidance unit 514 is an example of an output unit that outputs, in accordance with a result of the determination by the terminal status determination unit 513, guidance information for guiding a waiting customer waiting to start the operation to the transaction processing apparatus 1 that is in the state where the operation by the customer can be started, of the plurality of transaction processing apparatuses 1.

Note that the store server 5 can be realized by, for example, using a general-purpose computer device for servers as hardware and writing a control program to the main memory 52 or the auxiliary storage device 53. The control program may be stored in the main memory 52 or the auxiliary storage device 53 when the store server 5 is transferred or may be transferred separately from the above general-purpose computer device. In the latter case, the control program is recorded on a removable recording medium such as a magnetic disc, a magnetooptical disc, an optical disc, and a semiconductor memory and transferred or is transferred via a network.

The operation of the guidance system having such a configuration will be described below. Note that since the operations relating to registration and payment in the guidance system are the same as known operations, description thereof will be omitted. Therefore, the operation relating to the guidance of an available cash register will be described.

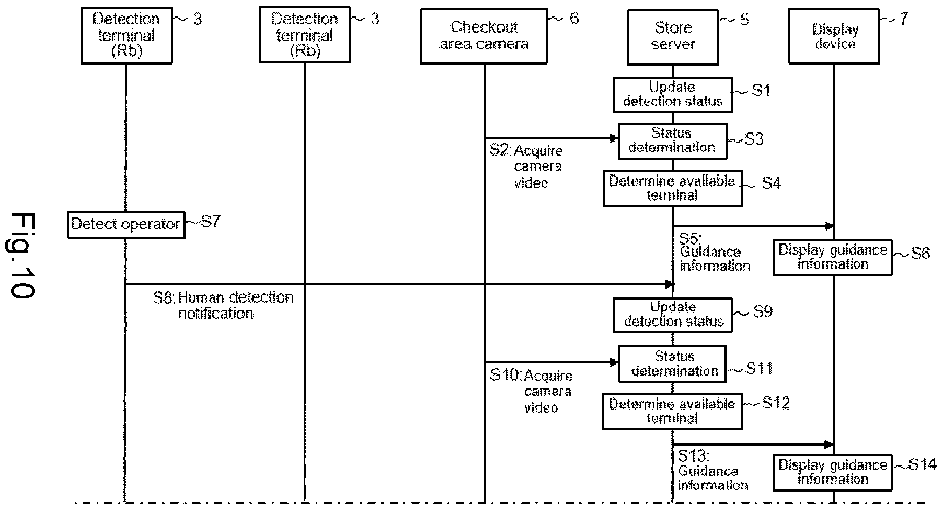

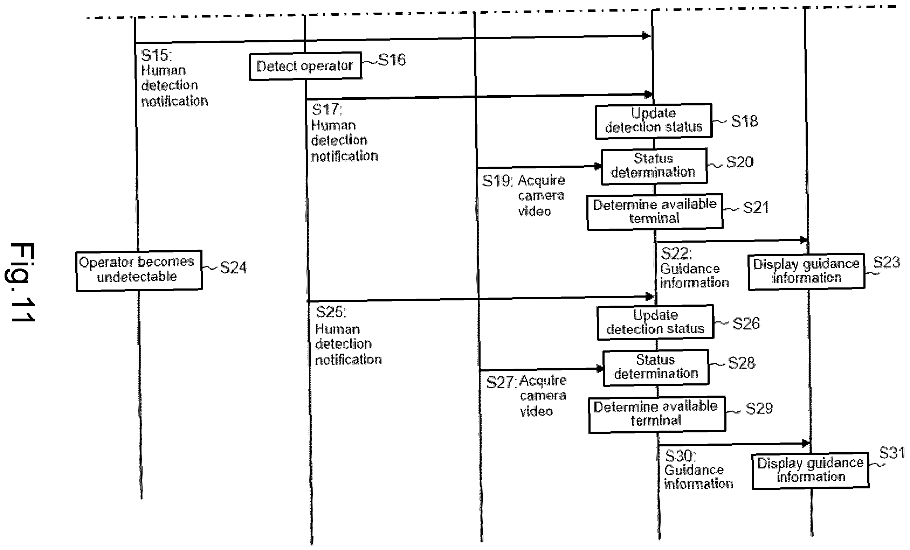

Fig. 10 and Fig. 11 are each a sequence diagram showing an overview of the operation relating to the guidance of an available cash register in the guidance system. Note that in this case, two of the eight detection terminals 3 are shown as representative examples. One detection terminal 3 will be referred to as the detection terminal 3 with the cash register number Ra, and the other will be referred to as the detection terminal 3 with the cash register number Rb.

As shown in Fig. 10 and Fig. 11, the store server 5 performs, at predetermined time intervals, detection status update processing of receiving a human detection notification from each detection terminal 3 and updating the available-cash-register detection status of the terminal status table 534 (Step S1). Note that as described above, no human detection notification is transmitted in the case where no human is detected in the detection terminal 3. The store server 5 updates the available-cash-register detection status of the terminal status table 534 to the available or in-use status by whether or not a human detection notification has been received.

Following this detection status update processing, the store server 5 acquires camera video from the checkout area camera 6 (Step S2). The store server 5 then performs status determination processing of determining the available cash register status of each self-service POS terminal using this camera video (Step S3). The store server 5 updates the available-cash-register determination status of the terminal status table 534 to the available or in-use status in accordance with the determination result.

The store server 5 then performs available-cash-register determination processing of determining an available terminal that is not in-use on the basis of the available-cash-register detection status and the available-cash-register determination status of the terminal status table 534 (Step S4). In this available-cash-register determination processing, the store server 5 determines, as an available terminal, the self-service POS terminal 100 in which the available-cash-register detection status of the terminal status table 534 is available and the available-cash-register determination status of the terminal status table 534 is available. For example, when no human is detected in both the detection terminal 3 with the cash register number Ra and the detection terminal 3 with the cash register number Rb, the self-service POS terminals 100 of the cash register numbers Ra and Rb are determined as available terminals for guidance information. The store server 5 generates guidance information for guiding a waiting customer to the available terminal determined in this way and transmits the guidance information to the display device 7 (Step S5).

The display device 7 displays this guidance information (Step S6).

For example, when a customer who is an operator is detected by the detection terminal 3 with the cash register number Ra (Step S7), a human detection notification is transmitted from the detection terminal 3 to the store server 5 (Step S8).

The store server 5 receives this human detection notification in the detection status update processing performed at predetermined time intervals and updates the available-cash-register detection status of the terminal status table 534 (Step S9). In this case, the cash register number Ra is updated to the in-use status. The store server 5 then acquires camera video from the checkout area camera 6 (Step S10), determines the available cash register status of each self-service POS terminal using this camera video, and updates the available-cash-register determination status of the terminal status table 534 in accordance with the determination result (Step S11). At this time, the available cash register status of the self-service POS terminal 100 of the cash register in which the available-cash-register detection status of the terminal status table 534 is the in-use status by a human detection signal from the detection terminal 3 is not necessarily the in-use status. For example, in the case where the purchaser SC has not started an operation yet although he/she is within the operation range of the self-service POS terminal 100, the patrol lamp 111 displays "idling" in some cases. For example, some self-service POS terminals 100 update the patrol lamp 111 to in-use in accordance with the detection output of a human sensor or a human detection notification of the detection terminal 3, while others update the patrol lamp 111 to in-use in accordance with the operator touching the touch panel 104.

The store server 5 then determines, in the available-cash-register determination processing, an available terminal that is not in-use on the basis of the available-cash-register detection status and the available-cash-register determination status of the terminal status table 534 (Step S12). For example, in the case where both the available-cash-register detection status and the available-cash-register determination status of the terminal status table 534 in the detection terminal 3 with the cash register number Ra are the in-use status, the detection terminal 3 with the cash register number Ra is not detected as an available terminal. In the case where no human has been detected in the detection terminal 3 with the cash register number Rb, the self-service POS terminal 100 of the cash register number Rb is determined as an available terminal in guidance information, and guidance information for guiding a waiting customer to the determined available terminal is generated and transmitted to the display device 7 (Step S13). The display device 7 displays this guidance information (Step S14).

Once a person has been detected, the detection terminal 3 continues to transmit a human detection notification until no human is detected (Step S15). For example, a customer who is an operator is detected in the detection terminal 3 with the cash register number Rb (Step S16), this detection terminal 3 also transmits a human detection notification to the store server 5 (Step S17).

The store server 5 receives these human detection notifications in the detection status update processing performed at predetermined time intervals and updates the available-cash-register detection status of the terminal status table 534 (Step S18). In this case, the cash register numbers Ra and Rb are set to in-use. The store server 5 then acquires camera video from the checkout area camera 6 (Step S19), determines the available cash register status of each self-service POS terminal using this camera video, and updates the available-cash-register determination status of the terminal status table 534 in accordance with the determination result (Step S20). The store server 5 determines an available terminal that is not in-use on the basis of the available-cash-register detection status and the available-cash-register determination status of the terminal status table 534 (Step S21), generates guidance information for guiding a waiting customer to the determined available terminal, and transmits the generated guidance information to the display device 7 (Step S22). The display device 7 displays this guidance information (Step S23).

Further, for example, when a customer who is an operator is not detected (operator becomes undetectable) in the detection terminal 3 with the cash register number Ra (StepS24), the transmission of a human detection notification is terminated. In contrast, in the case where a human is continuously detected, the detection terminal 3 with the cash register number Rb continues to transmit a human detection notification (Step S25).

The store server 5 updates, in the detection status update processing performed at predetermined time intervals, the available-cash-register detection status of the terminal status table 534 on the basis of the human detection notification from each detection terminal 3 (Step S26). For example, the cash register number Ra is set to available and the cash register number Rb is set to in-use. The store server 5 then acquire camera video from the checkout area camera 6 (Step S27), determines the available cash register status of each self-service POS terminal using this camera video, and updates the available-cash-register determination status of the terminal status table 534 in accordance with the determination result (Step S28). For example, the reason why the operator becomes undetectable in the detection terminal 3 with the cash register number Ra in Step S24 can be that the purchaser SC temporarily leaves the operation range of the self-service POS terminal 100. In the case where the payment processing is finished and the purchaser SC leaves the operation range of the self-service POS terminal 100, basically, the status information displayed by the patrol lamp 111 changes to "idling" before the operator becomes undetectable in the detection terminal 3 due to that the purchaser SC leaves the operation range of the self-service POS terminal 100. Therefore, in the case where the purchaser SC temporarily leaves the operation range of the self-service POS terminal 100 before the payment processing is finished, the patrol lamp 111 of the self-service POS terminal 100 still displays "in-use". Therefore, in such a case, the store server 5 sets the available-cash-register determination status of the terminal status table 534 to the in-use status. Further, in the case where the payment processing is finished and the purchaser SC laves the operation range of the self-service POS terminal 100, the patrol lamp 111 of the self-service POS terminal 100 displays "idling" before the operator becomes undetectable in the detection terminal 3. Therefore, in such a case, the store server 5 sets the available-cash-register determination status of the terminal status table 534 to the available status. The store server 5 determines an available terminal that is not in-use on the basis of the available-cash-register detection status and the available-cash-register determination status of the terminal status table 534 in this way (Step S29), generates guidance information for guiding a waiting customer to the determined available terminal, and transmits the generated guidance information to the display device 7 (Step S30). The display device 7 displays this guidance information (Step S31).

The operation of the store server 5 in the above Step S1 to Step S5, Step S9 to Step S13, Step S18 to Step S22, and Step S26 to Step S30 will be described below in detail.

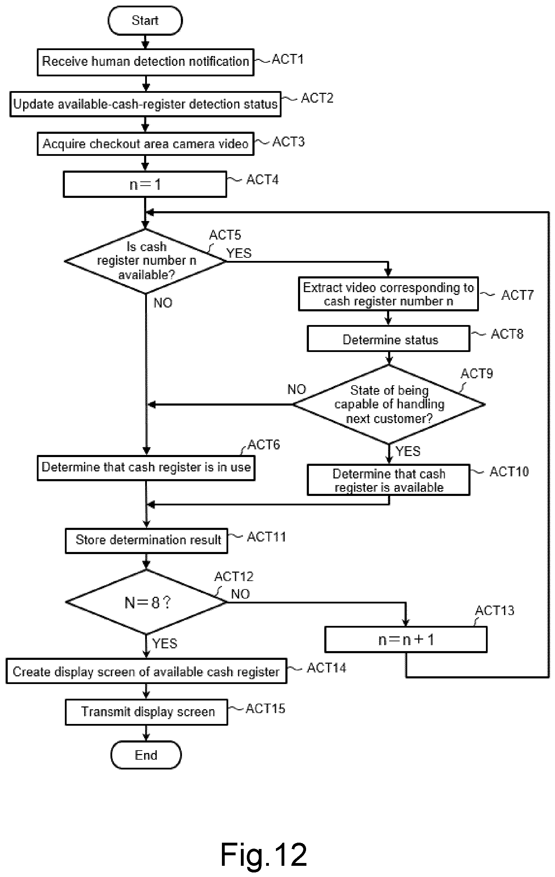

Fig. 12 is a flowchart showing a main procedure of information processing executed by the processor 51 of the store server 5. The processor 51 executes this processing at intervals of a certain period, e.g., every few seconds, on the basis of the control program stored in the main memory 52 or the auxiliary storage device 53. Note that unless otherwise specified, the processing operation of the processor 51 transitions to ACT(x+1) after ACTx (x is a natural number). Further, the procedure shown in Fig. 12 is an example. The procedure is not particularly limited as long as a similar result can be achieved.

In ACT1, the usage status acquisition unit 512 implemented in the processor 51 receives, by the communication interface 55, a human detection notification transmitted from the detection terminal 3 of each cash register system RS.

In ACT2, the usage status acquisition unit 512 updates the available-cash-register detection status in the terminal status table 534 on the basis of the received human detection notification.

In ACT3, the terminal status determination unit 513 implemented in the processor 51 acquires, by the communication interface 55, camera video from the checkout area camera 6. The terminal status determination unit 513 stores the acquired camera video in the temporary video storage unit 535.

In ACT4, the terminal status determination unit 513 initializes the value of an internal counter n to "1". This value of the internal counter n is used to designate the cash register number in the terminal status table 534.

In ACT5, the terminal status determination unit 513 determines whether or not the available-cash-register detection status of the cash register number indicated by the value of the internal counter n in the terminal status table 534 indicates the available status. In the case where the available-cash-register detection status is not the available status, i.e., is the in-use status, the terminal status determination unit 513 determines it as NO in ACT5, and the processing proceeds to ACT6. In the case where the available-cash-register detection status is the available status, the terminal status determination unit 513 determines it as YES in ACT5, and the processing proceeds to ACT7.

In ACT6, the terminal status determination unit 513 determines that the self-service POS terminal 100 of the cash register system RS of the cash register number is in the in-use status. After that, the processing of the terminal status determination unit 513 proceeds to ACT11.

In ACT7, the terminal status determination unit 513 extracts, from the camera video stored in the temporary video storage unit 535, the video corresponding to the cash register number indicated by the value of the internal counter n, i.e., the video of the corresponding part of the patrol lamp 111. Since the positional relationship between the checkout area camera 6 and the patrol lamp 111 of each self-service POS terminal 100 is fixed, which pixel group corresponds to the video of which patrol lamp 111 in the camera video is known.

In ACT8, the terminal status determination unit 513 determines the display status of the patrol lamp 111 from the extracted video.

In ACT9, the terminal status determination unit 513 determines, on the basis of the determined display status of the patrol lamp 111, i.e., the color pattern and the light emission pattern, whether or not the corresponding self-service POS terminal 100 is in a state of being capable of handling a next customer, i.e., in not the in-use status but the idling status. In the case where the corresponding self-service POS terminal 100 is not in the state of being capable of handling a next customer, i.e., it is in the in-use status, the terminal status determination unit 513 determines it as NO in ACT8, and the processing proceeds to the above ACT6. In the case where the corresponding self-service POS terminal 100 is in the state of being capable of handling a next customer, the terminal status determination unit 513 determines it as YES in ACT8, and the processing proceeds to ACT10.

As in ACT5 and ACT7 to ACT9, the terminal status determination unit 513 determines the status of only the self-service POS terminal 100 for which no human detection notification as detection information is received.

In ACT10, the terminal status determination unit 513 determines that the self-service POS terminal 100 of the cash register system RS of the cash register number is in the available cash register status.

In ACT11, the terminal status determination unit 513 stores the in-use status that is the determination result in ACT6 or the available cash register status that is the determination result in ACT10 in the available-cash-register determination status of the cash register number indicted by the value of the internal counter n in the terminal status table 534.

In ACT12, the terminal status determination unit 513 determines whether or not the value of the internal counter n is "8", i.e., whether or not the status of the available cash register has been determined for all cash register numbers in the terminal status table 534. In the case where the value of the internal counter n is "8", the terminal status determination unit 513 determines it as YES in ACT12, and the processing proceeds to ACT14. In the case where the value of the internal counter n is not "8", i.e., the determination has not been made for all cash register numbers, the terminal status determination unit 513 determines it as NO in ACT12, and the processing proceeds to ACT13.

In ACT13, the terminal status determination unit 513 increases the value of the internal counter n by "+1". After that, the processing of the terminal status determination unit 513 proceeds to the above ACT5.

In ACT14, the guidance unit 514 implemented in the processor 51 creates display-information of a display screen of an available cash register to be displayed on the display device 7. Specifically, the guidance unit 514 creates display-information of a display screen including the cash register number of the self-service POS terminal 100 in which the available-cash-register determination status in the terminal status table 534 is the available status.

In ACT15, the guidance unit 514 transmits the created display-information to the display device 7 by the communication interface 55. The processor 51 then ends this processing.

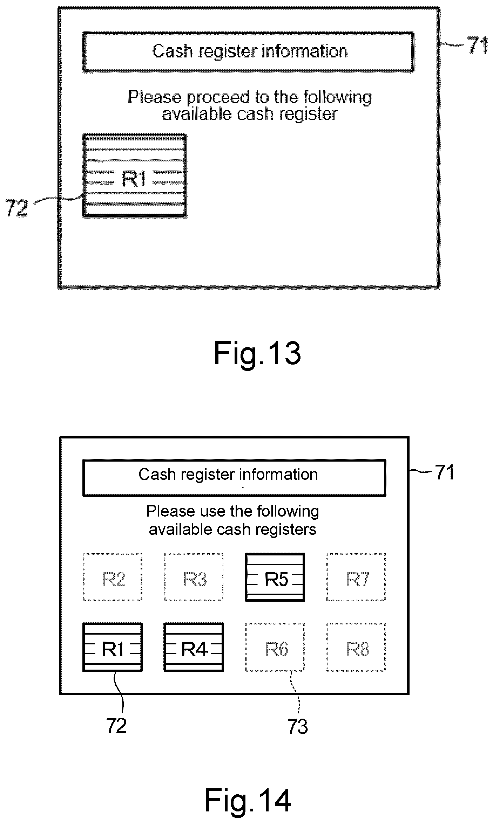

Fig. 13 is a diagram showing a display example of the display device 7. As shown in Fig. 13, one available-cash-register-number display 72 for showing the cash register number of the self-service POS terminal 100 in the available status is displayed on a display surface 71 of the display device 7. In the case where there is a plurality of cash register numbers of the self-service POS terminal 100 in which the available-cash-register determination status in the terminal status table 534 is the available status, the guidance unit 514 selects one cash register number from the top down in accordance with the priority designated in advance and creates display-information of a display screen. The priority can be arbitrarily set by the administrator of the store server 5. For example, priority may be given to the self-service POS terminal that is in the available status and has a short distance from the entrance for purchasers of the checkout counter CE, or priority may be given the self-service POS terminal that has been used by customers infrequently during a predetermined period or for a short period of time.

Fig. 14 is a diagram showing another display example of the display device 7. Fig. 14 shows an example in which all cash register numbers of the self-service POS terminal 100 in the available status are shown. In this case, the available-cash-register-number display 72 for showing the cash register number of the self-service POS terminal 100 in the available status is displayed on the display surface 71 of the display device 7. The cash register number of the self-service POS terminal 100 that is in-use and in the unavailable state is displayed as an unavailable-cash-register-number display 73 more faintly than the available-cash-register-number display 72. It goes without saying that the cash register number of the self-service POS terminal 100 in the unavailable state does not necessarily need to be displayed.

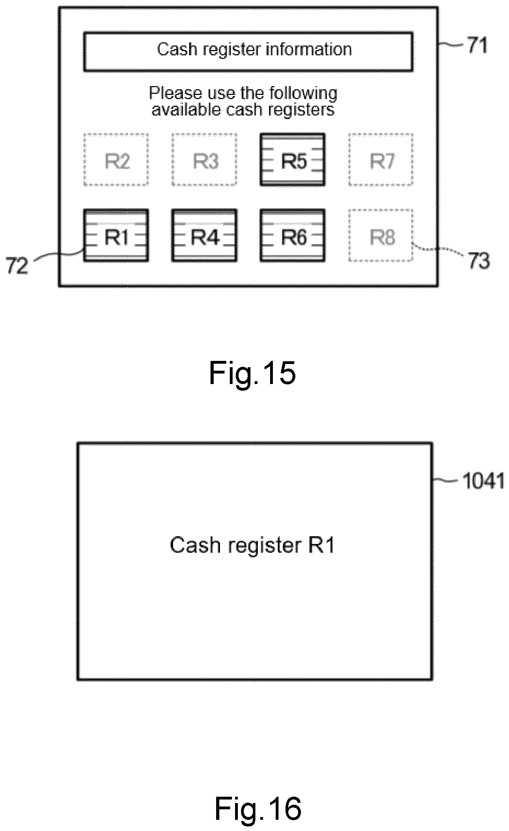

Fig. 15 is a diagram showing another display example of the display device 7. Fig. 15 shows a display example in which a payment at the self-service POS terminal 100 with the cash register number R6 has been finished and the status has changed to the available status from the available cash register status in Fig. 14. In this embodiment, in the case where the purchaser SC temporarily leaves the operation range of the self-service POS terminal 100 while the payment at the self-service POS terminal 100 with the cash register number R6 has not been finished, the display shown in Fig. 14 continues without transitioning to the display shown in Fig. 15.

As described above, the store server 5 as the information processing apparatus according to the first embodiment acquires, by the terminal status determination unit 513, image information capable of identifying the state of each of the self-service POS terminals 100 as the plurality of transaction processing apparatuses 1 that the purchaser SC performs an operation relating to a transaction, and receives, for each of the plurality of self-service POS terminals 100, detection information indicating the presence of a person at a specified operation position on the self-service POS terminal 100, by the usage status acquisition unit 512. The store server 5 determines, on the basis of the acquired image information and detection information, whether or not each of the plurality of self-service POS terminals 100 is in the state where the operation by the purchaser SC can be started. The store server 5 outputs, in accordance with the determination result, guidance information for guiding the purchaser SC who is a waiting customer waiting to start the operation at the entrance of the checkout counter CE to the self-service POS terminal 100 that is in the state where the operation by the purchaser SC can be started, of the plurality of self-service POS terminals 100, to the display device 7 by the guidance unit 514. Therefore, according to the information processing apparatus according to the first embodiment, since it is possible to determine and show the transaction processing apparatus 1 that in the state where the operation can be started, it is possible to guide a customer who uses the checkout counter CE in which the plurality of self-service transaction processing apparatuses 1 is installed to an appropriate transaction processing apparatus 1. For example, even if a customer operating the transaction processing apparatus 1 temporarily leaves the transaction processing apparatus 1 to call a sales clerk or take a product that he/she forgot to buy before the payment processing is completed, the transaction processing apparatus will not be determined as an available device and shown to another customer as an available device.

Further, in the first embodiment, the terminal status determination unit 513 determines whether or not a transaction processing apparatus for which no detection information is received is in the state where the operation by the purchaser SC can be started. Therefore, according to the information processing apparatus according to the first embodiment, since it is unnecessary to execute the determination processing on all self-service POS terminals 100, it is possible to speed up the processing.

Further, in the first embodiment, the terminal status determination unit 513 acquires, as image information, image information obtained by imaging the patrol lamp 111 included in the self-service POS terminal 100, which is a display member that displays whether the self-service POS terminal 100 is in the state of waiting to start use or being used, determines, on the basis of the image of the patrol lamp 111 included in this image information, whether or not the self-service POS terminal 100 is in the state of waiting to start use, and determines the self-service POS terminal 100 that is in the state of waiting to start use as being in the state where the operation by the purchaser SC can be started. Therefore, according to the information processing apparatus according to the first embodiment, by imaging the patrol lamp 111 displaying the state of the self-service POS terminal 100, it is possible to determine the state of the self-service POS terminal 100.

Note that the patrol lamp 111 shows the state of the self-service POS terminal 100 by at least one of the light emission color or the light emission state. Therefore, according to the information processing apparatus according to the first embodiment, it is possible to determine the state of the self-service POS terminal 100 easily by simply determining the light emission color and/or the light emission state of the patrol lamp 111.

Further, according to the guidance system according to the first embodiment, the self-service POS terminal 100 as a plurality of transaction processing apparatuses 1 that the purchaser SC who is a customer performs an operation relating to a transaction and the checkout area camera 6 as a generation device that generates image information capable of identifying the state of each of the plurality of self-service POS terminals 100 are installed in the checkout counter CE, the store server 5 as an information processing apparatus determines, on the basis of the image information generated by the checkout area camera 6, whether or not each of the plurality of self-service POS terminals 100 is in the state where the operation by the purchaser SC can be started and generates guidance information for showing the self-service POS terminal 100 that is in the state where the operation by the purchaser SC can be started, and the display device 7 as a presentation device that is installed at the entrance of the checkout counter CE presents the guidance information generated by the store server 5 to a purchaser who is a waiting customer waiting to start the operation. Therefore, according to the guidance system according to the first embodiment, since the transaction processing apparatus 1 that is in the state where the operation can be started can be determined and shown, it is possible to guide a customer who uses the checkout counter CE in which the plurality of self-service transaction processing apparatuses 1 is installed to an appropriate transaction processing apparatus 1.

### [Modification]

In the first embodiment, the checkout area camera 6 images the patrol lamp 111 of each self-service POS terminal 100 and the camera 22 of the transaction camera 2 corresponding to each self-service POS terminal 100 images the purchaser SC within the operation range.

By causing each detection terminal 3 to extract the image of the operation range of the self-service POS terminal 100 of the cash register system RS from the camera video taken by the checkout area camera 6 and use the image, the transaction camera 2 may be omitted.

Further, by adjusting the installation position, orientation, and posture of the camera 22 of the transaction camera 2 to allow the camera 22 to image the operation range of the self-service POS terminal 100 and the patrol lamp 111, the checkout area camera 6 may be omitted.

Further, instead of using the checkout area camera 6 to image the plurality of patrol lamps 111, each cash register system RS may include, in addition to the transaction camera 2, a camera that images the patrol lamp 111 of the self-service POS terminal 100 of the cash register system RS.

### [Second embodiment]

In the guidance system according to the first embodiment, the current status of the self-service POS terminal 100 is determined on the basis of the display state of the patrol lamp 111. This embodiment is an example in which the determination target for determining the current status of the self-service POS terminal 100 is those other than the patrol lamp 111. Specifically, in this embodiment, the display screen of the touch panel 104 of each self-service POS terminal 100 is the determination target.

Fig. 16 is a diagram showing an example of an idle screen 1041 displayed on the touch panel 104 of the self-service POS terminal 100. In the case where the self-service POS terminal 100 is in the available status, a specified idle screen 1041 indicating this fact is displayed on the touch panel 104. For example, as shown in Fig. 16, the idle screen 1041 includes a display indicating the cash register number of the self-service POS terminal 100 to the purchaser SC.

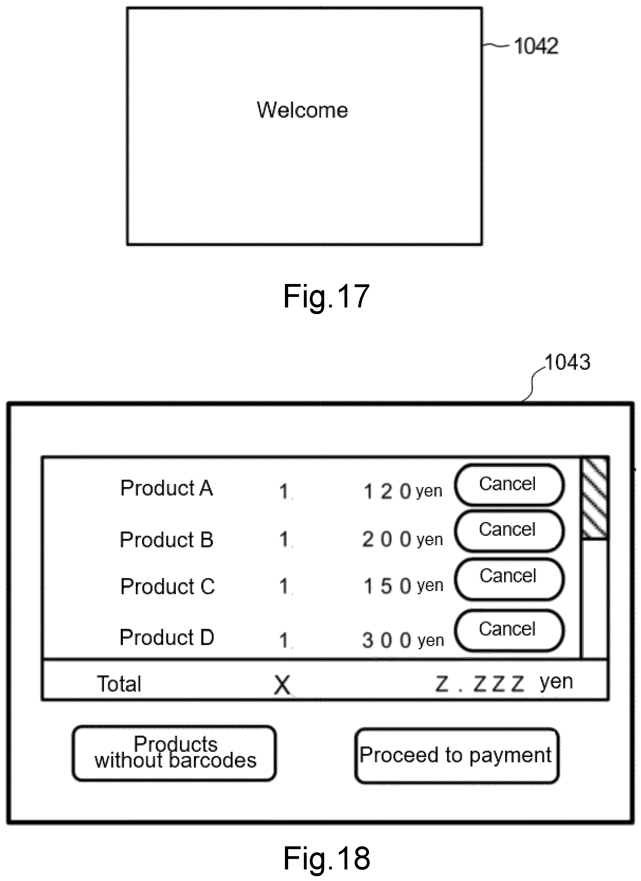

Fig. 17 is a diagram showing an example of a transaction start screen 1042 displayed on the touch panel 104 of the self-service POS terminal 100. For example, when the purchaser SC touches the touch panel 104, the screen switches from the idle screen 1041 shown in Fig. 16 to this transaction start screen 1042.

Fig. 18 is a diagram showing an example of a registration screen 1043 displayed on the touch panel 104 of the self-service POS terminal 100. The registration screen 1043 displays a list of registered products, the amount of money, and the like.

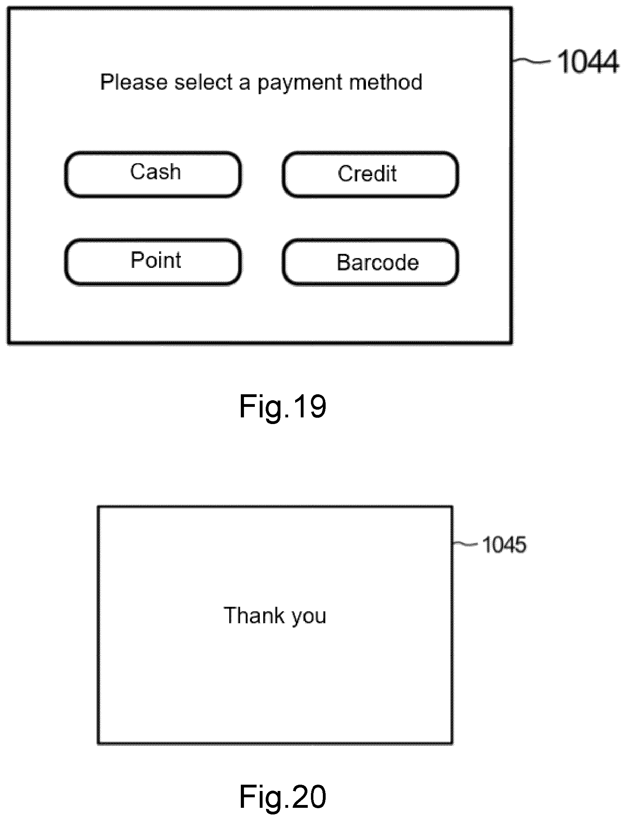

Fig. 19 is a diagram showing an example of a payment selection screen 1044 displayed on the touch panel 104 of the self-service POS terminal 100. When the "Proceed to payment" button included in the registration screen 1043 shown in Fig. 18 is touched, the screen switches to this payment selection screen 1044.

Fig. 20 is a diagram showing an example of a transaction completion screen 1045 displayed on the touch panel 104 of the self-service POS terminal 100. When a payment at the self-service POS terminal 100 is finished, this transaction completion screen 1045 is displayed. After the transaction completion screen 1045 is displayed for a certain period, the screen returns to the idle screen 1041 shown in Fig. 16.

In this regard, in this embodiment, the checkout area camera 6 images the touch panel 104 of each self-service POS terminal 100 and the camera 22 of the transaction camera 2 corresponding to each self-service POS terminal 100 images the purchaser SC within the operation range. The store server 5 then extracts the image of the display screen of the touch panel 104 of each self-service POS terminal 100 from the camera video taken by the checkout area camera 6 and determines the current status of the self-service POS terminal 100 in accordance with what screen is displayed.

Specifically, the store server 5 determines, in the case where the touch panel 104 displays the idle screen 1041, that the self-service POS terminal 100 is in the available status. In the case where the display of the touch panel 104 has switched from the idle screen 1041 to the transaction start screen 1042, the store server 5 determines that the self-service POS terminal 100 has become the in-use status. In the case where the display of the touch panel 104 is the registration screen 1043, the payment selection screen 1044, a payment screen (not shown), or the like, the store server 5 determines that the self-service POS terminal 100 is in the in-use status. Even if the detection terminal 3 stops transmitting a human detection notification, the store server 5 determines, in the case where the touch panel 104 displays such a registration screen 1043, payment selection screen 1044, payment screen, or the like, that the self-service POS terminal 100 is in the in-use status. Further, in the case where the display of the touch panel 104 has changed to the transaction completion screen 1045, the store server 5 may determine that the self-service POS terminal 100 has become the available status immediately without standing by until the screen switches to the idle screen 1041 or after a certain period of time has elapsed.

In this way, the touch panel 104 is an example of a display member that is included in the transaction processing apparatus and displays whether the transaction processing apparatus is in the state of waiting to start use or being used. The touch panel 104 can also be said to be an example of a display device that displays, by at least one of a character or a symbol, whether the transaction processing apparatus 1 is in the state of waiting to start use or being used.

As the specific processing of the store server 5, in ACT7, not the part of the patrol lamp 111 but the part of the display screen of the touch panel 104 is extracted as video corresponding to the cash register number indicated by the value of the internal counter n. Then, the display status of the display screen of the touch panel 104 is determined in ACT8, and whether or not the corresponding self-service POS terminal 100 is in the state of being capable of handling a next customer, i.e., in not the in-use status but the idling status, is determined on the basis of the determined display status of the touch panel 104, such as the idle screen 1041 and the transaction start screen 1042 in ACT9. In this way, the terminal status determination unit 513 implemented in the processor 51 is capable of determining the current status of the self-service POS terminal 100 by extracting the video of the touch panel 104 corresponding to the cash register number indicated by the value of the internal counter n from the camera video stored in the temporary video storage unit 535 and determining the screen of the touch panel 104 from the extracted video.

Note that although video for a certain period is necessary to determine whether the display of the patrol lamp 111 is blinking or being lit in the first embodiment, one shot image may be used in the second embodiment.

In this way, since the transaction processing apparatus 1 that is in the state where the operation can be started can be determined and shown similarly to the first embodiment even when the display screen of the touch panel 104 of each self-service POS terminal 100 is the determination target, it is possible to guide a customer who uses the checkout counter CE in which the plurality of self-service transaction processing apparatuses 1 is installed to an appropriate transaction processing apparatus 1.

Further, in the second embodiment, the terminal status determination unit 513 acquires, as image information, image information obtained by imaging the touch panel 104 included in the self-service POS terminal 100, which is a display member that displays whether the self-service POS terminal 100 is in the state of waiting to start use or being used, determines, on the basis of the image of the screen of the touch panel 104 included in this image information, whether or not the self-service POS terminal 100 is in the state of waiting to start use, and determines that the self-service POS terminal 100 that is in the state of waiting to start use as being in the state where the operation by the purchaser SC can be started. Therefore, according to the information processing apparatus according to the second embodiment, it is possible to determine the state of the self-service POS terminal 100 by imaging the touch panel 104 displaying the state of the self-service POS terminal 100.

Note that the touch panel 104 displays the state of the self-service POS terminal 100 by at least one of a character or a symbol such as a button. Therefore, according to the information processing apparatus according to the second embodiment, it is possible to determine the state of the self-service POS terminal 100 easily by simply determining the character and/or symbol displayed on the screen of the touch panel 104.

### [Modification]

In the second embodiment, by adjusting the installation position, orientation, and posture of the camera 22 of the transaction camera 2 to allow the camera 22 to image the operation range of the self-service POS terminal 100 and the display content of the touch panel 104, the checkout area camera 6 may be omitted, similarly to the modification of the first embodiment.

Further, instead of using the checkout area camera 6 to image the touch panels 104 of the plurality of self-service POS terminals 100, each the cash register system RS may include, in addition to the transaction camera 2, a camera that images the screen of the touch panel 104 of the self-service POS terminal 100 of the cash register system RS.

### [Third embodiment]

Although the display screen of the touch panel 104 of each self-service POS terminal 100 is the determination target in the guidance system according to the second embodiment, the display screen of the touch panel of the attendant terminal 4 is the determination target in a third embodiment.

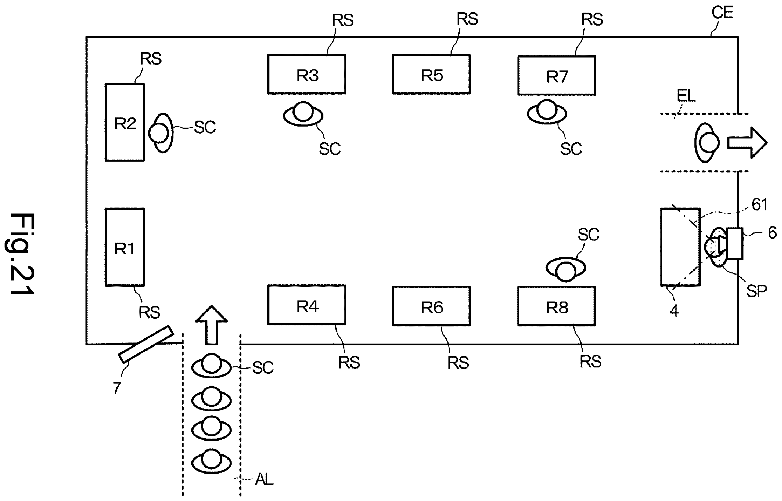

Fig. 21 is a schematic diagram showing an example of the checkout counter CE to which a guidance system according to the third embodiment is applied. In this embodiment, the checkout area camera 6 is installed such that the imaging range 61 is the display screen of the attendant terminal 4.

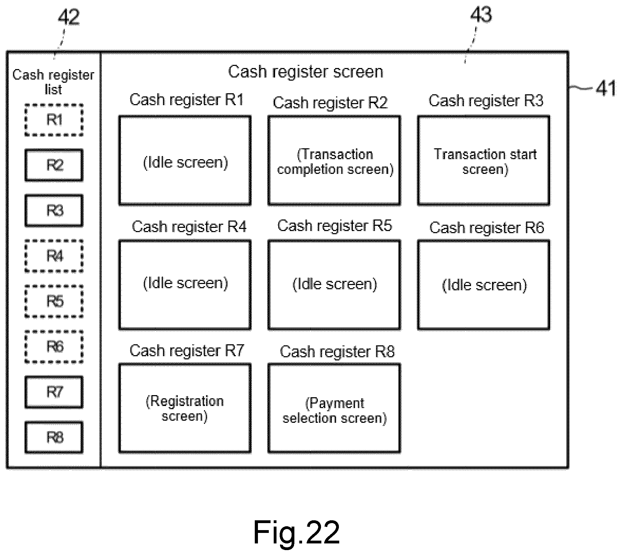

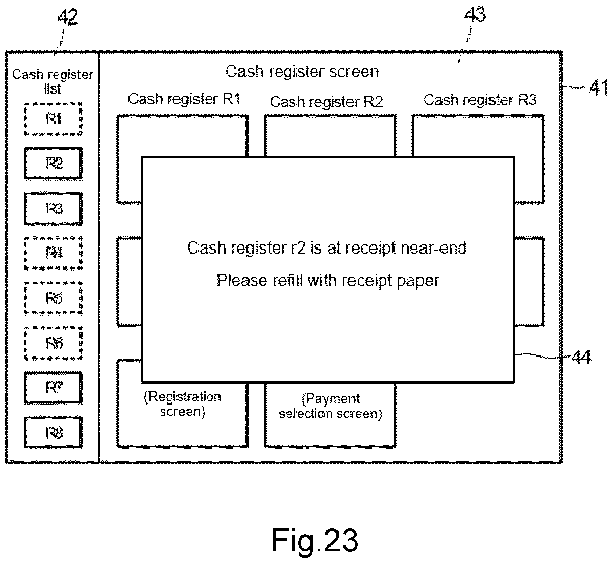

Fig. 22 and Fig. 23 are each a diagram showing an example of a monitoring screen 41 displayed on the touch panel of the attendant terminal 4. The monitoring screen 41 has a terminal list area 42 that displays, as icons, a list of the self-service POS terminals 100 of the cash register systems RS to be monitored, and a terminal state area 43 that displays the display content of the touch panel 104 of each self-service POS terminal 100. In the example of the terminal state area 43 shown in Fig. 22 and Fig. 23, the idle screen (see Fig. 16) is displayed as the display content of the touch panel 104 of each of the self-service POS terminals 100 of the cash register systems RS with the cash register numbers R1,R4,R5, and R6. Further, the transaction completion screen (see Fig. 20) is displayed as the display content of the touch panel 104 of the self-service POS terminal 100 of the cash register system RS with the cash register number R2. Further, the transaction start screen (see Fig. 17) is displayed as the display content of the touch panel 104 of the self-service POS terminal 100 of the cash register system RS with the cash register number R3. Further, the registration screen (see Fig. 18) is displayed as the display content of the touch panel 104 of the self-service POS terminal 100 of the cash register system RS with the cash register number R7. Further, the payment selection screen (see Fig. 19) is displayed as the display content of the touch panel 104 of the self-service POS terminal 100 of the cash register system RS with the cash register number R8. When an error has occurred in any of the self-service POS terminals 100, as shown in Fig. 23, a pop-up alert 44 is superimposed on the display content of the touch panel 104 of each self-service POS terminal 100 displayed in the terminal state area 43 of the monitoring screen 41 and displayed.

The attendant terminal 4 receives the status information indicating the state of the self-service POS terminal 100 and the display-information displayed on the touch panel 104, which are transmitted from each self-service POS terminal 100. The attendant terminal 4 displays the current status of each self-service POS terminal 100 in an identifiable manner by changing the color, concentration, or shape of the icon displayed on the terminal list area 42 on the basis of the received status information. In the example of the terminal list area 42 shown in Fig. 23, the self-service POS terminals 100 of the cash register systems RS with the cash register numbers R2, R3, R7, and R8 are displayed by icons indicating that it is in the in-use status, i.e., being monitored (icons indicated by a solid line), and the self-service POS terminals 100 of the cash register systems RS with the cash register numbers R1, R4, R5, and R6 are displayed by icons indicating that it is in the available status, i.e., not a monitoring target (icons indicated by a dotted line). Further, in Fig. 23, the icon has been changed to an icon displaying that an error has occurred in the self-service POS terminal 100 of the cash register system RS with the cash register number R2 in an identifiable manner.

In this regard, in this embodiment, the checkout area camera 6 images the monitoring screen 41 displayed on the touch panel 104 of the attendant terminal 4 and the camera 22 of the transaction camera 2 corresponding to each self-service POS terminal 100 images the purchaser SC within the operation range. The store server 5 then extracts, from the image of the terminal list area 42 that is the camera video taken by the checkout area camera 6, the image indicating the status of the self-service POS terminal 100 of each cash register system RS, and determines the current status of each self-service POS terminal 100 in accordance with what image is displayed. By fixing the positional relationship between the checkout area camera 6 and the monitoring screen 41 of the attendant terminal 4, which pixel corresponds to the video of the icon of which self-service POS terminal 100 in the camera video can be known. In the case where the positional relationship is not fixed, the store server 5 is capable of detecting which pixel corresponds to the video of the icon of which self-service POS terminal 100 in the camera video by determining the terminal list area 42 using known image recognition processing. It goes without saying that the current status of each self-service POS terminal 100 may be determined using the image of the terminal state area 43 instead of the image of the terminal list area 42, and both the image of the terminal list area 42 and the image of the terminal state area 43 may be used to improve the accuracy of determination.

In this way, the attendant terminal 4 is an example of a monitoring device that communicates with each of the transaction processing apparatuses 1 to monitor the state of each of the transaction processing apparatuses 1, and the monitoring screen 41 of the attendant terminal 4 is an example of a display screen that displays the state of the plurality of transaction processing apparatuses 1.

As the specific processing of the store server 5, in ACT7, the part of the icon of the self-service POS terminal 100 of the cash register number indicated by the value of the internal counter n in the monitoring screen 41 displayed on the touch panel of the attendant terminal 4 is extracted as the video corresponding to the cash register number indicted by the value of the internal counter n. Then, the display status of the icon is determined in ACT8, and whether or not the corresponding self-service POS terminal 100 is in the state of being capable of handling a next customer, i.e., in not the in-use status but the idling status is determined on the basis of the display status of the icon in ACT9. In this way, the terminal status determination unit 513 implemented in the processor 51 is capable of determining the current status of the self-service POS terminal 100 by extracting, from the camera video stored in the temporary video storage unit 535, the icon image of the terminal list area 42 corresponding to the cash register number indicated by the value of the internal counter n and determining what the extracted icon image is.

In this way, since the transaction processing apparatus 1 that is in the state where the operation can be started can be determined and shown even when the display screen of the touch panel of the attendant terminal 4 is the determination target similarly to the first embodiment, it is possible to guide a customer who uses the checkout counter CE in which the plurality of self-service transaction processing apparatuses 1 is installed to an appropriate transaction processing apparatus 1.

Further, in the third embodiment, the terminal status determination unit 513 acquires, as image information, image information obtained by imaging the monitoring screen 41 that is a display screen that displays the state of the plurality of self-service POS terminals 100 in the attendant terminal 4 as a monitoring device that communicates with each of the self-service POS terminals 100 to monitor the state of each of the self-service POS terminals 100, determines, on the basis of the image of the state display of the plurality of self-service POS terminals 100 included in this image information, e.g., the icon image of the terminal list area 42, whether or not the self-service POS terminal 100 is in the state of waiting to start use, and determines that the self-service POS terminal 100 that is in the state of waiting to start use as being in the state where the operation by the purchaser SC can be started. Therefore, according to the information processing apparatus according to the third embodiment, by imaging the monitoring screen 41 of the attendant terminal 4 that displays the state of the self-service POS terminal 100, it is possible to determine the state of the self-service POS terminal 100 easily.

### [Fourth embodiment]

In the guidance systems according to the first to third embodiments, the combination of the available-cash-register detection status by the detection terminal 3 and the available-cash-register determination status by the camera video taken by the checkout area camera 6 allows which self-service POS terminal 100 is in the available status to be determined. In a fourth embodiment, which self-service POS terminal 100 is in the available status is determined using only the available-cash-register determination status by the camera video taken by the checkout area camera 6.

Therefore, the processor 51 of the store server 5 as the information processing apparatus according to this embodiment does not necessarily need to implement the usage status acquisition unit 512 and the terminal status table 534 does not necessarily need to store the available-cash-register detection status.

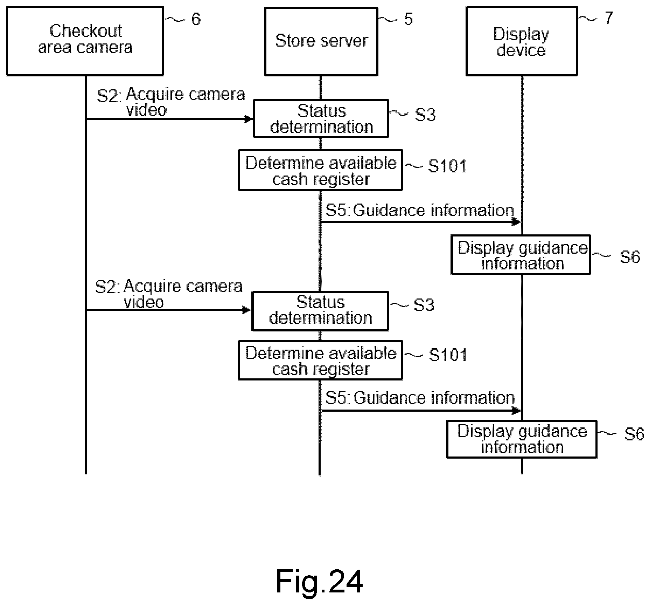

Fig. 24 is a sequence diagram showing an overview of the operation relating to the guidance of an available cash register in the guidance system according to the fourth embodiment. In this embodiment, as shown in Fig. 24, the store server 5 acquires camera video from the checkout area camera 6 at predetermined time intervals (Step S2). The store server 5 then performs status determination processing of determining the available cash register status of each self-service POS terminal using this camera video (Step S3). The store server 5 updates, in accordance with the determination result, the available-cash-register determination status of the terminal status table 534 to the available or in-use status.

The store server 5 then performs the available-cash-register determination processing of determining an available terminal that is not in-use on the basis of the available-cash-register detection status and the available-cash-register determination status of the terminal status table 534 (Step S101). In this embodiment, in this available-cash-register determination processing, the store server 5 determines, as an available terminal, the self-service POS terminal 100 in which the available-cash-register determination status of the terminal status table 534 is available. The store server 5 generates guidance information for guiding a waiting customer to the determined available terminal in this way and transmits the guidance information to the display device 7 (Step S5). The display device 7 displays this guidance information (Step S6).

After that, these Steps are repeated.

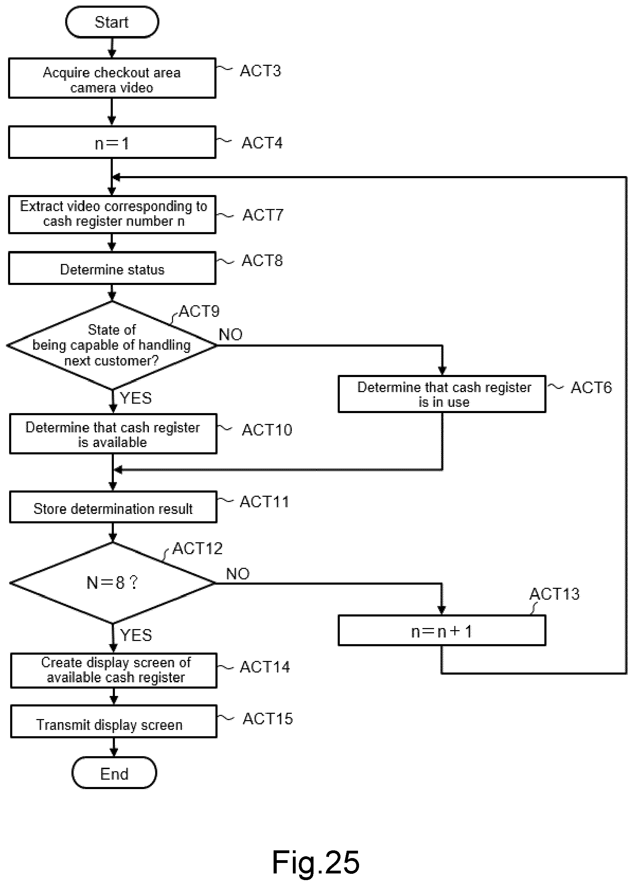

Fig. 25 is a flowchart showing a main procedure of information processing executed by the processor 51 of the store server 5 as the information processing apparatus according to the fourth embodiment. In this embodiment, when this processing is started, first, the terminal status determination unit 513 implemented in the processor 51 acquired the camera video from the checkout area camera 6 by the communication interface 55 and stores the camera video in the temporary video storage unit 535 in ACT3. Then, in ACT4, the terminal status determination unit 513 initializes the value of the internal counter n to "1". After that, in this embodiment, the processing of the terminal status determination unit 513 proceeds to ACT7.

The processing of ACT6 to ACT15 is as described in the first embodiment.

In this way, even when which transaction processing apparatus 1 is in the available state is determined using only the available-cash-register determination status by the camera video taken by the checkout area camera 6, it is possible to guide the purchaser SC as a customer who uses the checkout counter CE in which the plurality of transaction processing apparatuses 1 is installed to an appropriate transaction processing apparatus 1.

Further, according to the information processing apparatus according to the fourth embodiment, since the state of each transaction processing apparatus 1 is determined on the basis of the image, it is unnecessary to communicate with the transaction processing apparatus 1 to acquire the state. Therefore, the information processing apparatus can also be realized by using a computer that is not connected to the communication network NW. A guidance system can be constructed using the information communication apparatus, and the checkout area camera 6 and the display device 7, which are not connected to the communication network NW similarly. In particular, in stores where the transaction system TS and a store system including an attendant terminal and the store server 5 are in operation, the transaction processing apparatus 1 in the available status can be shown without linking to the store system, and thus, it can be introduced at low cost and in a short time.

Although embodiments of the guidance system and information processing apparatus have been described above, such embodiments are not limited thereto.

For example, the available-cash-register determination status by the camera video taken by the checkout area camera 6 under which the transaction processing apparatus is determined as the available status does not necessarily need to be determined in the condition described in the embodiment and may be arbitrarily set by the administrator of the store server 5 as the information processing apparatus.

Further, the information processing apparatus is not limited to the store server 5, and the function thereof may be given to a computer constituting the detection terminal 3 or the attendant terminal 4. Further, a dedicated computer connected to the communication network NW may be used. Alternatively, by connecting a connection device with the Internet to the communication network NW, a server computer provided on the cloud may be used as the information processing apparatus.

Further, a sales clerk may be placed at the entrance of the checkout counter CE and the sales clerk may orally guide a purchaser to a payment device. In this case, the display device 7 only needs to be installed at a position where an available cash register (available device) can be shown to not a purchaser but to the sales clerk.

Further, instead of using the transaction camera 2, pressure detection mats, which are sensors that detect the pressure of the weight of people and objects on the floor surface corresponding to the operation range of each transaction processing apparatus 1 of the checkout counter CE, may be laid out on the floor surface to detect whether or not the purchaser SC is present in the operation range of the transaction processing apparatus 1.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims are intended to cover such forms or modifications as would fall within the scope of the inventions.

## Claims

1. An information processing apparatus (5), comprising:
a communication interface (55) that communicates with an external device, the external device including
a camera (6) that images a plurality of transaction processing apparatuses that a customer performs an operation relating to a transaction and generates image information capable of identifying a state of each of the plurality of transaction processing apparatuses, and
a detection device (3) that detects, for each of the plurality of transaction processing apparatuses, a person at a specified operation position on the transaction processing apparatus and outputs detection information indicating presence of the person at the specified operation position on the transaction processing apparatus; and
a processor (51) configured to
acquire the image information generated by the camera from the camera via the communication interface,
receive the detection information output by the detection device from the detection device via the communication interface,
determine, on a basis of the acquired image information and the received detection information, whether or not each of the plurality of transaction processing apparatuses is in a state where the operation by the customer can be started, and
output, in accordance with a result of the determination, guidance information for guiding a waiting customer waiting to start the operation to a transaction processing apparatus that is in the state where the operation by the customer can be started, of the plurality of transaction processing apparatuses.

2. The information processing apparatus according to claim 1, wherein
the processor is further configured to determine, on the basis of the image information, whether or not the transaction processing apparatus for which the detection information has not been received is in the state where the operation by the customer can be started.

3. The information processing apparatus according to claim 1 or 2, wherein
the processor is further configured to
acquire, as the image information, image information including an image obtained by imaging a display member, the transaction processing apparatus including the display member, the display member displaying either the transaction processing apparatus is in a state of waiting to start use by the customer or a state of being used by the customer, and
determine, on a basis of the image of the display member included in the image information, whether or not the transaction processing apparatus is in the state of waiting to start use by the customer, and determine that the transaction processing apparatus that is in the state of waiting to start use by the customer is in the state where the operation by the customer can be started.

4. The information processing apparatus according to claim 3, wherein
the image of the display member included in the image information includes an image of a patrol lamp that expresses the state of waiting to start use by the customer and the state of being used by the customer of the transaction processing apparatus by at least one of a light emission color or a light emission state.

5. The information processing apparatus according to claim 3 or 4, wherein
the image of the display member included in the image information includes an image of a display screen of a display device that displays the state of waiting to start use by the customer and the state of being used by the customer of the transaction processing apparatus by at least one of a character or a symbol.

6. The information processing apparatus according to any one of claims 1 to 5,
wherein
the processor is further configured to
acquire, as the image information, image information including an image obtained by imaging a display screen of a monitoring device, the monitoring device communicating with each of the transaction processing apparatuses to monitor the transaction processing apparatuses by displaying a state of each of the transaction processing apparatuses on the display screen, and
determine, on a basis of the image of the display screen included in the image information, whether or not the transaction processing apparatus is in the state of waiting to start use by the customer, and determine that the transaction processing apparatus that is in the state of waiting to start use by the customer is in the state where the operation by the customer can be started.

7. The information processing apparatus according to any one of claims 1 to 6, further comprising
a storage device that stores the image information capable of identifying the state of each of a plurality of transaction processing apparatuses and the detection information indicating presence of a person at a specified operation position on each of the plurality of transaction processing apparatuses.

8. The information processing apparatus according to claim 7, wherein
the processor is further configured to
acquire the image information generated by the camera from the camera via the communication interface and the acquired image information in the storage device,
receive the detection information output by the detection device from the detection device via the communication interface and store the received detection information in the storage device, and
determine, on a basis of the image information and the detection information stored in the storage device, whether or not each of the plurality of transaction processing apparatuses is in the state where the operation by the customer can be started.

9. A control method for an information processing apparatus, comprising:
communicating with an external device via a communication interface, the external device including
a camera that images a plurality of transaction processing apparatuses that a customer performs an operation relating to a transaction and generates image information capable of identifying a state of each of the plurality of transaction processing apparatuses, and
a detection device that detects, for each of the plurality of transaction processing apparatuses, a person at a specified operation position on the transaction processing apparatus and outputs detection information indicating presence of the person at the specified operation position on the transaction processing apparatus;
acquiring the image information generated by the camera from the camera via the communication interface;
receiving the detection information output by the detection device from the detection device via the communication interface;
determining, on a basis of the acquired image information and the received detection information, whether or not each of the plurality of transaction processing apparatuses is in a state where the operation by the customer can be started; and
outputting, in accordance with a result of the determination, guidance information for guiding a waiting customer waiting to start the operation to a transaction processing apparatus that is in the state where the operation by the customer can be started, of the plurality of transaction processing apparatuses.

10. The control method according to claim 9, further comprising:
determining, on the basis of the image information, whether or not the transaction processing apparatus for which the detection information has not been received is in the state where the operation by the customer can be started.

11. The control method according to claim 9 or 10, further comprising:
acquiring, as the image information, image information including an image obtained by imaging a display member, the transaction processing apparatus including the display member, the display member displaying either the transaction processing apparatus is in a state of waiting to start use by the customer or a state of being used by the customer, and
determining, on a basis of the image of the display member included in the image information, whether or not the transaction processing apparatus is in the state of waiting to start use by the customer, and determine that the transaction processing apparatus that is in the state of waiting to start use by the customer is in the state where the operation by the customer can be started,
preferably wherein
the image of the display member included in the image information includes an image of a patrol lamp that expresses the state of waiting to start use by the customer and the state of being used by the customer of the transaction processing apparatus by at least one of a light emission color or a light emission state, and/or an image of a display screen of a display device that displays the state of waiting to start use by the customer and the state of being used by the customer of the transaction processing apparatus by at least one of a character or a symbol.

12. The control method according to any one of claims 9 to 11, further comprising:
acquiring, as the image information, image information including an image obtained by imaging a display screen of a monitoring device, the monitoring device communicating with each of the transaction processing apparatuses to monitor the transaction processing apparatuses by displaying a state of each of the transaction processing apparatuses on the display screen, and
determining, on a basis of the image of the display screen included in the image information, whether or not the transaction processing apparatus is in the state of waiting to start use by the customer, and determine that the transaction processing apparatus that is in the state of waiting to start use by the customer is in the state where the operation by the customer can be started.

13. A guidance system, comprising:
a plurality of transaction processing apparatuses that performs processing relating to a transaction of a customer by receiving an operation by the customer;
a camera (6) that images the plurality of transaction processing apparatuses and generates image information capable of identifying a state of each of the plurality of transaction processing apparatuses;
a detection device (3) that detects, for each of the plurality of transaction processing apparatuses, a person at a specified operation position on the transaction processing apparatus and outputs detection information indicating presence of the person at the specified operation position on the transaction processing apparatus;
an information processing apparatus according to any one of claims 1 to 6; and
a display device that presents the guidance information output by the information processing apparatus to a waiting customer waiting to start the operation.

14. The guidance system according to claim 13, further comprising
a storage device that stores the image information capable of identifying the state of each of a plurality of transaction processing apparatuses and the detection information indicating presence of a person at a specified operation position on each of the plurality of transaction processing apparatuses.

15. The guidance system according to claim 13 or 14, wherein
the processor is further configured to
acquire the image information generated by the camera from the camera via the communication interface and the acquired image information in the storage device,
receive the detection information output by the detection device from the detection device via the communication interface and store the received detection information in the storage device, and
determine, on a basis of the image information and the detection information stored in the storage device, whether or not each of the plurality of transaction processing apparatuses is in the state where the operation by the customer can be started.
